(19) **Europäisches Patentamt European Patent Office Office européen des brevets**

(11) **EP 4 697 477 A1**

(12) **EUROPEAN PATENT APPLICATION**

(43) Date of publication:
18.02.2026 Bulletin 2026/08

(51) International Patent Classification (IPC):
*H01M 50/342* (2021.01)     *H01M 50/15* (2021.01)

(21) Application number: 25195434.3

(52) Cooperative Patent Classification (CPC):
**H01M 50/3425; H01M 50/15**

(22) Date of filing: 12.08.2025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 14.08.2024 KR 20240108804
10.09.2024 KR 20240123535
27.03.2025 KR 20250039745
06.08.2025 KR 20250107913
11.08.2025 KR 20250110816
11.08.2025 KR 20250110953
11.08.2025 KR 20250110955

(71) Applicant: **LG Energy Solution, Ltd.**
**Seoul 07335 (KR)**

(72) Inventors:
• **LEE, Hyun Hee**
**34122 Yuseong-gu, Daejeon (KR)**
• **NOH, Seung Hyun**
**34122 Yuseong-gu, Daejeon (KR)**
• **PARK, Sang Joon**
**34122 Yuseong-gu, Daejeon (KR)**
• **SON, Young Jong**
**34122 Yuseong-gu, Daejeon (KR)**
• **SUH, Hyun Jung**
**34122 Yuseong-gu, Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **SECONDARY BATTERY**

(57)     Disclosed herein is a secondary battery comprising a casing, an electrode assembly arranged in the casing, a cap coupled to the casing, and a vent structure formed in the casing or the cap. The vent structure includes a plurality of outer predetermined breaking lines and a connection predetermined breaking line connecting the outer predetermined breaking lines, and the connection predetermined breaking line includes at least one curved portion extending in a curve.

**EP 4 697 477 A1**

## FIG. 4

## Description

## CROSS-REFERENCE TO RELATED APPLICATIONS

The present application claims priority to and the benefit of Korean Patent Application Nos. 10-2024-0108804, 10-2024-0123535, and 10-2025-0039745, respectively filed on August 14, 2024, September 10, 2024, and March 27, 2025, in the Korean Intellectual Property Office, the entire disclosure of which is incorporated herein by reference.

## TECHNICAL FIELD

The present disclosure relates to a secondary battery that is chargeable and dischargeable. More particularly, the present disclosure relates to a vent structure for use in a secondary battery, to a housing part comprising a vent structure for use in a secondary battery and to a secondary battery comprising a vent structure.

## BACKGROUND

Recently, as the demand for portable electronic devices such as notebook computers, video cameras, and mobile phones has rapidly increased and the development of electric vehicles, energy storage batteries, robots, satellites, and the like has been actively promoted, intensive research has been conducted on high-performance secondary batteries capable of repeated charging and discharging.

Currently commercialized secondary batteries may include nickel-cadmium batteries, nickel-metal hydride batteries, nickel-zinc batteries, lithium secondary batteries, and the like. Among the secondary batteries listed above, lithium secondary batteries are attracting attention due to advantages such as allowing flexible charging and discharging owing to negligible memory effect compared to nickel-based secondary batteries, exhibiting a significantly low self-discharge rate, and having a relatively high energy density.

Such lithium secondary batteries mainly use a lithium-based oxide and a carbon material as a positive electrode active material and a negative electrode active material, respectively. In addition, the lithium secondary battery may include a positive electrode plate and a negative electrode plate on which the positive electrode active material and the negative electrode active material are respectively applied, an electrode assembly in which the positive electrode plate and the negative electrode plate are located with a separator interposed therebetween, and an external housing that seals and accommodates the electrode assembly together with an electrolyte.

Lithium secondary batteries may be classified, according to the shape of a battery casing, into a can-type secondary battery, in which an electrode assembly may be embedded in a rigid housing (e.g., a metal can), and a pouch-type secondary battery in which an electrode assembly may be embedded in a pouch formed of a sheet (e.g., an aluminum laminate sheet). The can-type secondary battery may also be classified into a cylindrical secondary battery and a prismatic secondary battery according to the shape of the housing (e.g., the metal can).

## SUMMARY

In the case of a secondary battery, in particular a can-type secondary battery such as a prismatic secondary battery, a vent structure that opens in response to an increase in internal pressure may be provided. The vent structure may be desired to open precisely at a preset pressure in order to enhance the safety of the secondary battery.

The present disclosure is directed to providing a secondary battery capable of efficiently and reliably relieving an increase in internal pressure, e.g., to open precisely at a preset pressure. Further embodiments are directed to a vent structure for use in a secondary battery and a housing part comprising a vent structure for use in a secondary battery that are capable of efficiently and reliably relieving an increase in internal pressure, e.g., to open precisely at a preset pressure.

A secondary battery according to one aspect of the present disclosure may include a casing (which may, e.g., include an internal space), an electrode assembly arranged in (e.g., inserted into or accommodated in) the casing (wherein the electrode assembly may be configured to perform charging and discharging, e.g., be configured to be charged and discharged), a cap (e.g., a cap plate) coupled to the casing, and a vent structure formed in (e.g., provided or located along, on and/or in) the casing or the cap (e.g., in the cap plate). The vent structure (which may, e.g., also be referred to as vent portion) may include a plurality of outer predetermined breaking lines (which may also be referred to as side or lateral predetermined breaking lines and, e.g., be embodied as notches (for example scores), which may be referred to as outer or side notches or lateral scores) and a connection predetermined breaking line (which may, e.g., be embodied as a notch (for example a score), which may then be referred to as a connection notch or connection score) connecting the outer predetermined breaking lines. The connection predetermined breaking line (e.g., the connection notch) may include at least one curved portion (which may also be referred to as a curved line) extending in a curve (i.e., formed of a curve or following a curved path), e.g., along a longitudinal/length direction of the connection predetermined breaking line.

The secondary battery may be configured to be charged and discharged. The secondary battery may be a can-type secondary battery, in particular a prismatic secondary battery.

The casing and the cap are not particularly limited and may be embodied in various ways, e.g., as known in the art. The casing and the cap may together form a housing of the secondary battery (which may accommodate and, optionally, seal the electrode assembly, e.g., together with an electrolyte). A side (or surface) of the casing at which the cap is arranged may be referred to herein as the top or upper side (or surface) of the case or the battery, without, however, intending to define any particular orientation of the case or battery with respect to the direction of gravity. The casing (which may also be referred to as case herein) and/or the cap may be made of (e.g., comprise or consist of) a rigid material, in particular a metal material. The casing and/or housing may have a prismatic shape (i.e., have, at least substantially, the shape of a prism), in particular a quadrilateral (quadrangular) prismatic shape such as a rectangular prismatic shape (i.e., have, at least substantially, the shape of a rectangular cuboid). Alternatively, the casing and/or the housing may, e.g., have a cylindrical shape. The casing may have an opening, e.g., for inserting the electrode assembly into the casing. The opening may be formed at at least one side (e.g., surface) of the case (e.g., the top side or surface). In some examples, the opening may extend over the entire side (e.g., the entire top or top surface) of the case. The cap may cover (e.g., seal) the opening of the casing. The cap may be embodied as (or comprise) a cap plate, for example a quadrilateral or rectangular cap plate (e.g., in case of a prismatic secondary battery) or an elliptical or circular cap plate (e.g., in case of a cylindrical battery).

The electrode assembly is not particularly limited and may be embodied in various ways, e.g., as is known in the art. The electrode assembly may for example comprise one or more positive electrodes (e.g., electrode sheets or plates) and one or more negative electrodes (e.g., electrode sheets or plates), which may for example be stacked and/or wound to form the electrode assembly, e.g., with one or more separators interposed therebetween.

The vent structure is provided in the casing or the cap. In some examples, a plurality of vent structures may be provided in the casing and/or the cap (e.g., a first vent structure in the casing and a second vent structure in the cap), wherein each of the vent structures may be embodied as described herein. The vent structure may be integrally formed with the respective one of the casing or the cap or may be provided as a separate part (e.g., attached to the casing or cap, for example by welding). The vent structure may be arranged in and/or on an opening or hole (which may be referred to as a vent hole) in the respective one of the casing or the cap.

The vent structure (e.g., when closed) may be configured to provide a seal, for example for an electrolyte of the battery. The vent structure may be configured to open in response to an increase in internal pressure in the secondary battery (e.g., in the casing and/or housing), for example at a preset pressure (e.g., when the internal pressure is equal to or greater than the preset pressure). The vent structure, when opened, may be configured to allow for gas (and, optionally, liquid) discharge from within the secondary battery.

The venture structure includes a plurality of outer predetermined breaking lines (e.g., two, three, four or more outer predetermined breaking lines) and a connection predetermined breaking line that connects (e.g., extends between) the outer predetermined breaking lines. The outer predetermined breaking lines (in conjunction) may at least partially, in some examples fully enclose the connection predetermined breaking line. The connection predetermined line may be arranged in an inner space (e.g., an inner area) between the outer predetermined breaking lines.

The connection predetermined breaking line and/or some or all of the outer predetermined breaking lines may extend parallel to a plane of the vent structure (e.g., a plane defined by a base thereof), for example in a (respective) plane perpendicular to a thickness direction of the vent structure (e.g., as defined below). Additionally or alternatively, some or all of the predetermined breaking lines may lie in (at least substantially) a same plane, i.e., the connection predetermined breaking line and/or some or all of the outer predetermined breaking lines may extend in (at least substantially) the same plane.

Each of the predetermined breaking lines may be a (deliberately introduced) line or region of weakness, which may be configured to break (e.g., fracture, open, bend, fold and/or otherwise deform) under pressure (e.g., at said preset pressure). Thereby, the vent structure may be opened. Each of the predetermined breaking lines may for example be a structurally weakened portion of the vent structure, which may for example be formed by removal and/or deformation of material. The predetermined breaking lines may for example be formed in a base (e.g., a substrate such as a plate or slab) of the vent structure, e.g., as detailed below.

Some or all of the predetermined breaking lines may be embodied as notches (e.g., as elongate cuts or grooves in the vent structure, for example by scoring) and in particular scores. Additionally or alternatively, some or all of the predetermined breaking lines may for example comprise a plurality of holes and/or indentations, a different material from other parts of the vent structure and/or an interface between different structures and/or different materials.

Each of the predetermined breaking lines may be a narrow, elongate structure (rather than, e.g., being a strictly one-dimensional mathematical line), for example having an aspect ratio (length to width, e.g., in a plane of the vent structure) of at least 5 : 1, in some examples at least 10 : 1, in one example at least 20 : 1 and in one example at least 50 : 1.

The connection predetermined breaking line is structurally distinct from the outer predetermined breaking lines (i.e., the connection predetermined breaking line and the outer predetermined breaking lines do not form portions of a single, smoothly extending single predetermined breaking line). The connection predetermined breaking line may for example connect to (e.g., meet or intersect with) all of the outer predetermined breaking lines at an angle, wherein the angle (e.g., the smallest angle formed between the respective breaking lines) may for example be between 20° and 90°, for example at least 45° or 60° and/or at most 90°, 80° or 70°.

The outer predetermined breaking lines may be spatially separated from each other (e.g., may not be directly connected to each other, other than (indirectly) by the connection predetermined breaking line) or may alternatively be connected to each other, e.g., form portions of a single breaking line (for example an oval or track-shaped breaking line).

As used herein, a longitudinal direction (or length direction) of the vent structure may refer to a direction of a long/longitudinal axis (major axis) of the vent structure (e.g., the base thereof), which may for example be a direction of largest extent or physical dimension of the vent structure (e.g., following the longest side of the vent structure, for example parallel to a longest edge and/or longest symmetry axis of the vent structure (without the predetermined breaking lines)) and/or a direction perpendicular to the thickness and width directions as defined below. An extent or physical dimension of the vent structure along the longitudinal direction may be referred to as the longitudinal extent

(or length) of the vent structure. The direction of largest extent may for example be defined by the longest line between two points along an outer perimeter of the vent structure (e.g., of a base thereof, of a portion of the vent structure exposed through a vent hole, or of the set of (all) predetermined breaking lines of the vent structure) that are farthest apart from each other, wherein said line may extend through a center of the vent structure and/or parallel to an edge or side of the vent structure and/or to a symmetry axis of the vent structure (excluding the possibly asymmetric predetermined breaking lines).

A thickness direction of the vent structure may refer to a direction of smallest extent of the vent structure, for example to a direction perpendicular to a base of the vent structure and/or perpendicular to a plane in which the predetermined breaking lines are arranged.

A width direction (or lateral direction) of the vent structure may for example refer to a direction of a short axis (minor axis) of the vent structure in a plane of the vent structure (e.g., in a plane perpendicular to the thickness direction), for example a direction of smallest extent of the vent structure in the plane of the vent structure, e.g., in the plane perpendicular to the thickness direction (and thus for example parallel to the base of the vent structure and/or parallel to a plane in which the predetermined breaking lines are arranged). The width direction may for example be defined by the shortest line between two points along an outer perimeter of the vent structure (e.g., a base thereof or the set of (all) predetermined breaking lines of the vent structure) and on opposite sides of the vent structure that are closest to each other, wherein said line may extend in the plane of the vent structure through a center of the vent structure and/or parallel to an edge or side of the vent structure and/or to a symmetry axis of the vent structure (excluding the possibly asymmetric predetermined breaking lines). The extent or physical dimension of the vent structure along the width direction (e.g., smallest extent of the vent structure in the plane perpendicular to the thickness direction) may also be referred to as the lateral extent (or width) of the vent structure. The width direction may or may not be perpendicular to the longitudinal direction.

An aspect ratio of the vent structure in the plane perpendicular to the thickness direction (e.g., length to width) may be larger than one, for example between 1.2 : 1.0 and 3.5 : 1.0. In other words, a major axis of the vent structure may be formed longer than the minor axis of the vent structure. For example, the major axis may have a length that ranges from 1.2 times to 3.5 times that of the minor axis.

Physical dimensions of the vent structure may be adapted to physical dimensions of the cap plate (or the respective side of the casing where the vent structure is formed). In one example, the following equation may be satisfied: (width of the vent structure) / (length of the cap plate (or casing side)) = AL * (length of the vent structure) / (width of the cap plate (or of casing side)), where AL may be a constant satisfying $0.08 \leq AL \leq 0.36$. The width and length of the cap plate (or casing side) may be defined as described above for the width and length, respectively, of the vent structure (but with respect of a width and longitudinal direction, respectively, of the cap plate/casing side).

A distance between electrode tabs of the secondary battery and/or a distance between terminals of the secondary battery may be larger than one or both of the width and length of the vent structure, for example between 1.2 times and 6.5 the width of the vent structure.

A length of the connection predetermined breaking line (e.g., as measured along the (curved) path of the connection predetermined breaking line (referred to as path length), for example between the point where the connection predetermined breaking line connects to the (e.g., first and second) outer predetermined breaking lines) may be between 0.9 times and 1.3 times the length of the vent structure. The length of the connection predetermined breaking line may be greater than the length of the vent structure, e.g., between 1.01 times to 1.3 times the length of the vent structure.

A length of the connection predetermined breaking line (e.g., the path length as measured along the (curved) path of the connection predetermined breaking line) may be smaller than a length of some or all of the outer predetermined breaking lines (e.g., as measured along the (curved) path of the respective outer predetermined breaking line (referred to as path length)), e.g., smaller than a length of one or both of the first and second outer predetermined breaking lines (as defined below). The length of the respective outer predetermined breaking line(s) may for example be between 1.02 times to 1.27 times the length of the connection predetermined breaking line. The length of the first outer predetermined breaking line may be equal to the length of the second outer predetermined breaking line.

In one example, the following equation may be satisfied: length of the connection predetermined breaking line + length of the first outer predetermined breaking line + length of the second outer predetermined breaking line = DL * (width of the vent structure) with $2.5 \leq DL \leq 6.5$. Additionally or alternatively, the following equation may be satisfied: sum of the lengths of all predetermined breaking lines [i.e., length of the connection predetermined breaking line + sum of the lengths of all outer predetermined breaking lines] = DL * (width of the vent structure) with $2.5 \leq DL \leq 6.5$.

The connection predetermined breaking line includes one or more curved portions (which may for example be embodied as bends). Each of the curved portions extends (in a longitudinal direction along a length of the breaking line) in (i.e., along) a curve (e.g., a path of non-zero curvature, for example when viewed perpendicular to the base of the vent structure and/or to the respective surface of the casing or cap that the vent structure is formed in). Some or all of the (one or more) curved portions may extend parallel to (e.g., in) the plane of the vent structure (e.g., the plane defined by a base thereof), for example in a (respective) plane perpendicular to a thickness direction of the vent structure. Some or all of the (one or more) curved portions may protrude (e.g., extend, bulge and/or be bowed out) in a (positive or negative) width direction of the vent structure.

The connection predetermined breaking line may include two curved portions of different curvature (e.g., having a different direction/sign of curvature and/or a different amount/absolute value of curvature, e.g., different radii of curvature). The connection predetermined breaking line may in particular include two curved portions of opposite curvature (i.e., having opposite directions/signs of curvature or, put differently, protruding convexly in opposite directions), e.g., as detailed below.

According to one aspect of the present disclosure, the curved portion (curved line) may extend in an arc shape (i.e., extending in an arc or defining an arc or arc shape) having a first curvature radius. The arc shape may for example be a circular arc, i.e., an arc or segment of a circle, wherein the radius of the circle may correspond to the first curvature radius.

According to one aspect of the present disclosure, one or more (e.g., all) of the outer predetermined breaking lines may also include a curved portion (e.g., a bend) extending in a curve (for example in an arc shape having a second curvature radius), e.g., similar as described above for the connection predetermined breaking line. Put differently, in some examples, one or more (e.g., each) of the outer predetermined breaking lines (e.g., side notches) may include a curved portion formed in an arc shape and having a second curvature radius.

The connection predetermined breaking line may be arranged on a concave side of the curved portion of the respective outer predetermined breaking line (e.g., on a side towards which the curved portion is curved and/or which is, at least partially, enclosed by the curved portion). The connection predetermined breaking line may connect to the respective outer predetermined breaking line on the concave side of the curved portion of the respective outer predetermined breaking line. Additionally or alternatively, the respective outer predetermined breaking line may at least partially enclose the connection predetermined breaking line (e.g., an end portion thereof connected to the respective outer predetermined breaking line).

According to one aspect of the present disclosure, the first curvature radius (of the curved portion of the connection predetermined breaking line) and the second curvature radius (of the curved portion of the one or more of the outer predetermined breaking lines) may be formed to be different from each other, e.g., with one of the radii being at least 1.1 times, in some examples at least 1.8 times the other one of the radii.

According to one aspect of the present disclosure, the first curvature radius may be greater than the second curvature radius, e.g., at least 1.1 times, in some examples at least 1.8 times the second curvature radius.

According to one aspect of the present disclosure, the first curvature radius may be 1.1 times to 5.5 times the second curvature radius.

According to one aspect of the present disclosure, the first curvature radius may be 1.8 times to 2.2 times the second curvature radius.

According to one aspect of the present disclosure, one or more (e.g., all) of the one or more outer predetermined breaking lines that include a curved portion may further include a first linear portion connected to a first end of the curved portion and extending in a straight line and, optionally, a second linear portion connected to a second end of the curved portion opposite to the first end and extending in a straight line.

Put differently, in some examples, one or more (e.g., each) of the outer predetermined breaking lines (e.g., side notches) may include a first linear portion connected to one end of the curved portion and extending in a straight line, and a second linear portion connected to a remaining end of the curved portion and extending in a straight line.

One or both of the first and second linear portions may smoothly connect to the curved portion (i.e., without a kink or sharp bend), e.g., connect tangentially to the respective end of the curved portion. One or both of the first and second linear portions may extend parallel or substantially parallel to a longitudinal direction (e.g., long axis and/or direction of largest extent) of the vent structure and/or to a longitudinal direction (e.g., long axis or direction of largest extent) of the cap or the side of the casing that the vent structure is formed in. The first and second linear portions may be parallel or substantially parallel to each other. One or more (e.g., all) of the one or more outer predetermined breaking lines may have (e.g., extend in) a U-shape (with the curved portion connecting the two straight legs/linear portions).

As used herein, two directions or elements being substantially parallel (or being/extending in substantially the same direction) may for example refer to the directions and elements, respectively, being (e.g., extending or projecting) at an (acute) angle of between -20° and 20°, in some examples between -10° and 10°, in one example between -5° and 5° and in one example between -2° and 2° to each other.

According to one aspect of the present disclosure, the connection predetermined breaking line (e.g., the connection notch) may include a first curved portion (also referred to as first curved line) and a second curved portion (also referred to as a second curved line).

One or both of the first and second curved portions may for example be embodied as described above (e.g., one or both extending in an arc shape having a respective curvature radius). The first curved line may correspond to the curved portion of the connection predetermined breaking line described above.

According to one aspect of the present disclosure, the first curved portion and the second curved portion may protrude convexly (e.g., be bowed out) in opposite directions. Put differently, the first curved portion and the second curved portion may be of (have) opposite (equal or unequal) curvatures, i.e., have opposite directions/signs of curvature. The connection predetermined breaking line may for example have an S-shape or wave shape. The first curved portion may for example protrude convexly in an (e.g., positive) width direction of the vent structure and the second curved portion in the opposite direction (e.g., the negative width direction).

According to one aspect of the present disclosure, the first curved portion and the second curved portion may have the same curvature radius (i.e., the curvature radius of the first curved portion may equal the curvature radius of the second curved portion). Put differently, the first and second curved portion may for example both extend in an arc shape having a same curvature radius but, optionally, with opposite orientation/sign of curvature (e.g., such that the centers of the respective circular arcs/circles lie on opposite sides of the connection predetermined breaking line).

According to one aspect of the present disclosure, the connection predetermined breaking line may be formed with (e.g., may have) an inflection portion (e.g., an inflection point) connecting the first curved portion and the second curved portion. At the inflection portion, a sign of curvature of the connection predetermined breaking line may change (e.g., from the one of the first curved portion to the one of the second curved portion, for example from convex to concave or vice-versa). In some examples, the connection predetermined breaking line may be point symmetric with respect to the inflection portion (e.g., a center thereof such as the inflection point). Additionally or alternatively, the plurality of outer predetermined breaking lines may be point symmetric with respect to the inflection portion (e.g., the center thereof).

An acute angle (e.g., as seen in a direction viewed perpendicular to the base of the vent structure and/or to the respective surface of the casing or cap that the vent structure is formed in) formed by (e.g., defined between) a tangent line to the inflection portion (e.g., to the connection predetermined breaking line at the inflection point) and by a (straight) reference line extending through a center (e.g., a geometric center, centroid, bounding box center or center of symmetry) of the vent structure and parallel to a longitudinal direction (e.g., long/longitudinal axis and/or direction of largest extent) of the vent structure (e.g., along the major axis of the vent structure), may range from 5 degrees to 60 degrees, in some examples from 5 degrees to 45 degrees, preferably from 10 degrees to 30 degrees, one example from 15 degrees to 25 degrees. Both the tangent line and the reference line may be virtual lines (mathematical lines) in the sense that these lines may not manifest in any structural feature of the vent structure (i.e., may be drawn but are not present in the actual product).

Put differently, in some examples, the connection notch may be formed with an inflection point at which the first curved line (first curved portion) and the second curved line (second curved portion) meet. An inclination angle of an acute angle formed by a tangent line at the inflection point and a virtual reference line positioned at a central portion in a width direction (e.g., the short axis and/or direction of shortest extent) of the vent structure and extending in a longitudinal direction (e.g., the long axis and/or direction of longest extent) of the vent structure may range from 5 degrees to 60 degrees, in some examples from 10 degrees to 30 degrees.

Additionally or alternatively, a corresponding acute angle within the aforementioned ranges may be formed by the tangent line to the inflection portion and a different reference line associated with the vent structure and/or the connection predetermined breaking line, for example a reference line extending between end points of the connection predetermined breaking line (e.g., where the connection predetermined breaking line connects to the outer predetermined breaking lines), a reference line extending between (outer) end points of the first and second curved portions, a reference line corresponding a symmetry line of the vent structure (not taking into account the predetermined breaking lines, e.g., a symmetry line of a base of the vent structure), a reference line connecting the two distant most point of the vent structure (e.g., defining the longest extent of the vent structure), and/or a reference line extending through the center of the vent structure and perpendicular to a width direction (e.g., short axis and/or direction of smallest extent) of the vent structure in a plane of the vent structure (lateral extent).

According to one aspect of the present disclosure, a first distance that is a maximum distance between the connection predetermined breaking line and the reference line extending through the center of the vent structure and parallel to the longitudinal direction of the vent structure (or, additionally or alternatively, the maximum distance to one or more of the other reference lines mentioned above) is 0.05 times to 0.4 times, in some examples 0.1 times to 0.3 times a second distance that is a maximum distance between the respective reference line and the outer predetermined breaking lines. In other words, the outer predetermined breaking lines may extend much farther from the respective reference line than the connection predetermined breaking line, e.g., at least two times, in some examples at least three times, in some examples at least five times and in one example at least ten times as far as the connection predetermined breaking line.

Or put differently, in some examples, a first distance that is a maximum distance between the connection notch and the virtual reference line extending in a longitudinal direction of the vent structure may be 0.05 times to 0.4 times a second distance that is a maximum distance between the virtual reference line and the side notches.

In some examples, a lateral extent (e.g., a maximum distance between outermost points) of the connection predetermined breaking line (along the width direction of the vent structure) may be smaller than a lateral extent of the plurality of outer predetermined breaking lines (along the width direction of the vent structure), for example between 0.05 times and 0.4 times the lateral extent of the plurality of outer predetermined breaking lines, in some examples between 0.1 times and 0.3 times the lateral extent of the plurality of outer predetermined breaking lines.

According to one aspect of the present disclosure, the vent structure may include two outer predetermined breaking lines (which may be referred to as the first and second outer predetermined breaking lines) connected by the connection predetermined breaking line. Optionally, the two outer predetermined breaking lines may enclose 25% to 100%, preferably 50% to 90%, in one example 60% to 80% of a length of the connection predetermined breaking line (i.e., enclose the connection predetermined breaking line along the respective fraction of its length). The length of the connection predetermined breaking line may for example be the (shortest/straight) distance between the two points on the connection predetermined breaking line that are farthest apart from each other (projected length) and/or a length of the (curved) path along which the connection predetermined breaking line extends (path length). The connection predetermined breaking line may for example be considered as "enclosed" by the two outer predetermined breaking lines where an outer predetermined breaking line is arranged on both sides of the connection predetermined breaking line (e.g., in a direction normal to the connection predetermined breaking line and/or normal to the line connecting the two points on the connection predetermined breaking line that are farthest apart from each other).

Put differently, in some examples, the vent structure may include two outer predetermined breaking lines (e.g., two side notches), and the two outer predetermined breaking lines may be formed to enclose 50% to 90% of the connection predetermined breaking lines (e.g., the connection notch).

According to one aspect of the present disclosure, the vent structure may include a base (e.g., a plate, slab, sheet, carrier or other substrate) having a first side (e.g., a first surface) and a second side (e.g., a second surface) opposite to the first side. The first side may for example face (or be to face) towards an exterior of the secondary battery (and may thus also be referred to as the outer side or surface of the base) and the second side may for example face (or be to face) towards an interior of the secondary battery (and may thus also be referred to as the inner side or surface of the base), or vice-versa. In some examples, the base may be integrally formed with the casing and cap, respectively, or a part thereof. Put differently, the casing and cap, respectively, or a part thereof may form the base. In other examples, the base may, e.g., be provided as a separate piece, wherein the base may for example be attached to the casing and cap, respectively (e.g., by welding). The base may for example have an elliptical (e.g., circular), oval, track/racetrack or quadrilateral (e.g., rectangular) shape.

The connection predetermined breaking line and the outer predetermined breaking lines may be formed in and/or on the base, e.g., in and/or on the first and/or second sides. In examples where the connection predetermined breaking line is embodied as a notch, a depth of the notch may be between 0.1 times and 0.9 times, in some examples between 0.2 times and 0.8 times, in one example between 0.3 times and 0.7 times a thickness of the base of the vent structure (e.g., in a direction perpendicular to the respective side of the base of the vent structure that the connection predetermined breaking line is arranged at and/or in a thickness direction of the vent structure).

According to one aspect of the present disclosure, the vent structure may include a first elongate protrusion (first elongated protrusion) protruding from the first side of the base. Additionally or alternatively, the vent structure may include a first groove (e.g., an elongate recess or depression) in the second side of the base. The first elongate protrusion may for example be formed as a ridge (which may, e.g., protrude convexly from a surface or base of the vent structure). In some examples, the first elongate protrusion and the first groove may be aligned with each other, for example such that the first elongate protrusion and the first groove extend along a same path over at least part of their length or their entire length. For example, the first elongate protrusion and the first groove may overlap with each other when viewed along a direction perpendicular to the first (or second) side of the base (e.g., along the thickness direction of the vent structure). One or both of the first elongate protrusion and the first groove may be formed by deforming (e.g., bending and/or indenting) the base of the vent structure, optionally while maintaining a thickness of the base. In one example, the first elongate protrusion and the first groove may be formed by a same deformation of the base (e.g., such that formation of the first groove on the second side forms/results in the first elongate on the first side of the base). The first elongate protrusion and/or the first groove may be narrow, elongate structures, e.g., having an aspect ratio of at least 5 : 1, in some examples at least 10 : 1 and in one example at least 20 : 1.

The first elongate protrusion and/or the first groove may each extend along the connection predetermined breaking line (e.g., along a same path as the connection predetermined breaking line), for example along the entire length of the predetermined breaking line or a part thereof (e.g., at least 50%, in some examples at least 75%, in one example at least 90% thereof). The connection predetermined breaking line or a part thereof (e.g., over a length within the aforementioned ranges) may be formed in and/or on one or both of the first elongate protrusion and the first groove (e.g., in and/or on a surface of the respective one of the first elongate protrusion and the first groove), for example at a top of the first elongate protrusion and/or a bottom of the first groove.

Put differently, in some examples, the vent structure may include a first linear protrusion extending in a longitudinal direction of the connection predetermined breaking line (e.g., the connection notch) and protruding convexly (e.g., from the vent structure), and the connection predetermined breaking line (e.g., the connection notch) may be positioned in (e.g., on) the first linear protrusion.

A width of the first elongate protrusion and/or a width of the first groove (e.g., perpendicular to a (respective) longitudinal direction along which the protrusion and groove, respectively, extends primarily) may be equal to a width of the connection predetermined breaking line or may be larger than (e.g., between 1.5 times and 20 times, in some examples between 2.0 times and 10 times) the width of the connection predetermined breaking line (in particular in examples where the connection predetermined line is embodied as a notch). In examples where the connection predetermined breaking line is embodied as a notch, a depth of the notch may be smaller than, e.g., between 0.05 times and 0.9 times, in some examples between 0.1 times and 0.5 times, a height of the first elongate protrusion and/or a depth of the first groove (e.g., in a direction perpendicular to a surface of the base of the vent structure and/or in the thickness direction of the vent structure).

According to one aspect of the present disclosure, the vent structure may include, for some or all of the outer predetermined breaking lines, one or both of a respective second elongate protrusion (second elongated protrusion) protruding from the first or second side of the base and a respective second groove in the second and first side, respectively, of the base (i.e., the second elongate protrusion and the respective second groove may be arranged on opposite sides of the base). The second elongate protrusion(s) and the second groove(s) may for example be embodied as described above for the first elongate protrusion and the first groove, respectively (e.g., with a same width and/or depth and/or by a similar deformation of the base).

The second elongate protrusion and the second groove may extend along the respective outer predetermined breaking line, for example as described above for the first elongate protrusion and the first groove in relation to the connection predetermined breaking line (e.g., over a length and/or with a width and/or depth as described above but in this case with respect to the respective outer predetermined breaking line).

The respective outer predetermined breaking line may be formed in and/or on one or both of the second elongate protrusion and the second groove, for example as described above for the connection predetermined breaking line in relation to the first elongate protrusion and/or the first groove.

Put differently, in some examples, the vent structure may include second linear protrusions (which may, e.g., correspond to the aforementioned second elongate protrusions) extending in longitudinal directions of the respective outer predetermined breaking lines (e.g., the respective side notches) and protruding convexly (e.g., from the vent structure), and the outer predetermined breaking lines (e.g., the side notches) may be positioned in the respective second linear protrusions.

According to one aspect of the present disclosure, the vent structure may include a first linear groove (which may, e.g., correspond to the aforementioned first groove) extending in a longitudinal direction of the connection predetermined breaking line (e.g., the connection notch) and recessed in a concave shape (e.g., within and/or into the vent structure), and second linear grooves (which may, e.g., correspond to the aforementioned second grooves) extending in longitudinal directions of the respective outer predetermined breaking lines (e.g., the respective side notches) and recessed in a concave shape. The connection predetermined breaking line (e.g., the connection notch) may be positioned in the first linear groove, and the outer predetermined breaking lines (e.g. the side notches) may be positioned in the respective second linear grooves.

According to one aspect of the present disclosure, the vent structure may include a recess (which may also be referred to as a base recess or a first recess) in the first or second side of the base of the vent structure. The connection predetermined breaking line and the outer predetermined breaking lines may be formed in and/or on a bottom of the recess, for example such that all of the predetermined breaking lines are enclosed (e.g., encompassed) by an edge (e.g., a sidewall or rim) of the recess. The recess may be an areal recess (i.e., a broad recess over an extended area), for example having a length and a width of a same order of magnitude (e.g., differing by less than a factor of five, in some examples by less than a factor of three or two), for example in contrast to the elongate protrusions and grooves. The recess may extend over a sizeable part of the base of the vent structure, for example at least 50%, in some examples at least 70%, in one example at least 80% of a surface area of the respective side of the base. The recess may for example have an elliptical (e.g., circular), oval, track/racetrack or quadrilateral (e.g., rectangular) shape. The bottom of the recess (e.g., with the exception of the first and/or second grooves optionally formed therein/thereon as described below) may be flat (e.g., planar or non-bent), e.g., a flat surface surrounded by the (e.g., bent) edge of the recess.

Optionally, some or all of the first groove and/or the second grooves (and/or some or all of the first elongate protrusion and the second elongate protrusions) may, if present, also be formed in and/or on a bottom of the recess. For example, where the vent structure comprises the first groove, the first groove may be formed in the bottom of the recess, e.g., so as to form a two-stepped structure (recess in side/surface of base and then first groove in bottom of recess). The connection predetermined breaking line may be formed in and/or on the first groove (e.g., in and/or on a bottom of the groove), for example so as form, in case of a connection notch, a three-stepped structure (recess in side/surface of base, first groove at bottom of recess and then connection notch at bottom of first groove). The outer predetermined breaking lines may be formed directly in the bottom of the recess (e.g., without second grooves) or in and/on second grooves at the bottom of the recess (or in and/on second elongate protrusions on the side of the base opposite to the recess or at the bottom of the recess).

Put differently, in some examples, the vent structure may include a first recess (which may correspond to the aforementioned recess) enclosing (e.g., encompassing) the outer predetermined breaking lines (e.g., the side notches) and the connection predetermined breaking line (e.g., the connection notch), and a second recess (which may correspond to the aforementioned first groove) positioned in a bottom of the first recess and extending in a longitudinal direction of the connection predetermined breaking line (e.g., the connection notch). The outer predetermined breaking lines (e.g., the side notches) may be positioned in the first recess, and the connection predetermined breaking line (e.g., the connection notch) may be positioned in the second recess.

According to one aspect of the present disclosure, the base of the vent structure may comprise a bent portion (which may also be referred to as a convex portion), e.g., a domed, dished or curved portion, arranged between (e.g., extending between and/or enclosed by) the connection predetermined breaking line and one or more of the outer predetermined breaking lines. The bent portion may protrude from a plane extending between the connection predetermined breaking line and said one or more of the outer predetermined breaking lines (e.g., the plane that the respective portions of the predetermined breaking lines between which the bent portion is arranged lie in and/or a plane spanned by straight connecting lines between respective portions of the predetermined breaking lines). This plane may be referred to as the reference plane in the following. Or put differently, the bent portion may be bent (e.g., protrude) in a thickness direction of the vent structure (i.e., out of a plane of the vent structure or base). In the bent portion, the first side of the base may be convex (e.g., protrude convexly) and/or the second side of the base concave (e.g., be recessed concavely), or vice-versa. The bent portion may protrude outwardly (in a direction away from the interior of the casing) or inwardly (in a direction towards the interior of the casing). The bent portion may be bent continuously throughout the bent portion, e.g., from the connection predetermined breaking line up to the one or more of the outer predetermined breaking lines. The bent portion may for example not comprise any flat or straight part. A bending curvature (e.g., inverse bending radius) and/or a bending angle or inclination (e.g., with respect to said reference plane) of the bent portion may be smaller, in some examples substantially smaller (e.g., at least two times smaller, in some examples at least three times smaller, in one example at least five times smaller and in one example at least ten times smaller) than the bending curvature and/or bending angle/inclination, respectively, of the aforementioned first and second grooves.

A first bending angle under which the bent portion extends (e.g., protrudes) from the connection predetermined breaking line relative to the reference plane (e.g., at at least one or more points along the connection predetermined breaking line, in some example along the entire bent portion) may for example be between 1 degree and 30 degrees, in some examples between 1 degree and 20 degrees, in some examples between 5 degrees and 20 degrees, in one example between 7 degrees and 18 degrees and in one example between 2 degrees and 15 degrees.

A second bending angle (or second bending angles) under which the bent portion extends (e.g., protrudes) from (a respective one of) said one or more outer predetermined breaking lines relative to the reference plane (e.g., at at least one or more points along the respective outer predetermined breaking line, in some example along the entire bent portion) may for example be between 2 degrees and 30 degrees, in some examples between 2 degrees and 25 degrees, in some examples between 6 degrees and 25 degrees, in some examples between 6 degrees and 20 degrees, and in one example between 7 degrees and 16 degrees.

One or both of the first and second bending angles may vary along the longitudinal direction of the vent structure, for example depending on a distance between the connection predetermined breaking line/the curved portion and the respective of the outer predetermined breaking lines (e.g., decrease with increasing distance and/or increase with decreasing distance). For example, one or both of the first and second bending angles may exhibit a (local or global) maximum and/or minimum at (a longitudinal position or plane perpendicular to the longitudinal direction corresponding to/intersecting with) an outermost point of the first and/or second curved portions of the connection predetermined breaking line (e.g., the point(s) of maximum distance between the connection predetermined breaking line/the curved portion and the reference line extending through the center of the vent structure and parallel to the longitudinal direction and/or the point(s) of minimum or maximum distance between the connection predetermined breaking line/the curved portion and the respective of the outer predetermined breaking lines). One or both of the first and second bending angles may for example exhibit a maximum at a point of minimum distance between the connection predetermined breaking line/the curved portion and the respective of the outer predetermined breaking lines and/or may exhibit a minimum at a point of maximum distance between the connection predetermined breaking line/the curved portion and the respective of the outer predetermined breaking lines. The maximum of the first and/or second bending angles may for example be between 6 degrees and 25 degrees and/or may be between 1.2 times and 2.5 times a minimum of the respective bending angle.

In some examples, the first bending angle may be smaller than (some or all of) the second bending angle(s), e.g., at least 10% smaller, in some examples at least 20% smaller. The second bending angle(s) may for example be between 1.1 times to 3.5 times the first bending angle and/or may be between 1 degree and 10 degrees larger than the first bending angle. The first bending angle may for example be smaller than the second bending angle(s) (e.g., within the aforementioned ranges) at one or more points along the length of the bent portion in the longitudinal direction of the direction, for example at an outermost point of the first and/or second curved portions of the connection predetermined breaking line and/or along the entire length in the longitudinal direction of the vent structure.

In some examples, the bent portion (e.g., a first portion thereof) may be arranged between the connection predetermined breaking line and a first one of the outer predetermined breaking lines and (e.g., a second portion thereof) between the connection predetermined breaking line and a second one of the outer predetermined breaking lines.

In some examples, the bent portion may additionally comprise a (third or intermediate) portion arranged between the first and second portions of the bent portion. The third/intermediate portion may for example extend from the connection predetermined breaking line towards, and optionally up to or through, a gap between the first and second ones of the outer predetermined breaking lines, e.g., towards or up to an edge of the base. Additionally or alternatively, the third/intermediate portion may extend from a (longitudinally) central portion, in particular the inflection portion, of the connection predetermined breaking line towards the first and/or second one(s) of the outer predetermined breaking line (e.g., towards the gap)

The first bending angle (under which the bent portion extends from the connection predetermined breaking line relative to the reference plane) may be smaller in the third/intermediate portion than in one or both of the first and second portions, e.g., at least 10% smaller, in some examples at least 20% smaller.

A third bending angle under which the third portion of the bent portion extends (e.g., protrudes) from the gap between the first and second ones of the outer predetermined breaking lines relative to the reference plane may for example be between 2 degrees and 20 degrees, in some examples between 5 degrees and 15 degrees and in one example between 6 degrees and 10 degrees. Additionally or alternatively, the third bending angle may be smaller than (some or all) of the second bending angle(s) (in particular a maximum of the second bending angle(s)), e.g., at least 10% smaller, in some examples at least 20% smaller and in some examples at least 30% smaller. The maximum of the second bending angle and/or the second bending angle at an outermost point of the curved portion of the connection predetermined breaking line may for example be between 1.2 times to 2.5 times the third bending angle. The third bending angle may for example be measured at a longitudinal position or plane perpendicular to the longitudinal direction corresponding to (e.g., intersecting with) a center of the vent structure and/or an inflection portion or point of the connection predetermined breaking line.

The bent portion (convex portion) may protrude from the vent structure (e.g., the base thereof) in a direction opposite to the direction in which some or all of the predetermined breaking lines, if embodied as notches such as scores, are recessed (e.g., if arranged on a same side of the vent structure or base thereof as the respective notches). Alternatively, the bent portion may protrude from the vent structure (e.g., the base thereof) in a same direction as the direction in which some or all of the predetermined breaking lines, if embodied as notches such as scores, are recessed (e.g., if arranged on opposite sides of the vent structure or base thereof as the respective notches)

According to one aspect of the present disclosure, the base of the vent structure may comprise a plurality of bent portions (convex portions), some or all of which may for example be embodied as described above. Some or all of the bent portions may protrude in a same direction (e.g., outwardly).

The base may for example comprise a first bent portion (first convex portion) arranged on a first side of the connection predetermined breaking line (which may, e.g., be the bent portion referred to above) and a second bent portion (second convex portion) arranged on a second side of the connection predetermined breaking line opposite to the first side.

The first bent portion may for example be arranged between the connection predetermined breaking line and a first portion of a first one of the outer predetermined breaking lines. Optionally, the first bent portion may also be arranged between the connection predetermined breaking line and a first portion of a second one of the outer predetermined breaking lines (e.g., as described above, in particular optionally with an intermediate portion as described above).

The second bent portion may for example be arranged between the connection predetermined breaking line and a second portion of the first one of the outer predetermined breaking lines (on the opposite side of the connection predetermined breaking line as the first portion of the first one of the outer predetermined breaking lines). Optionally, the second bent portion may also be arranged between the connection predetermined breaking line and a second portion of the second one of the outer predetermined breaking lines (e.g., as described above, in particular optionally with an intermediate portion as described above).

A height of the first bent portion (a distance by which the first bent portion protrudes, e.g., from the reference plane and/or a side of the base opposite to the direction in which the first bent portion protrudes) may be the same as a height of the second bent portion or may be different from (e.g., greater than, for example at least 2% greater than, in some examples at least 10% greater than, in some examples at least 20% greater than) the height of the second bent portion (e.g., 1.02 times to 2.5 times the height of the second bent portion).

According to one aspect of the present disclosure, the vent structure may comprise one or more support ribs, which may for example extend along (e.g., a respective one of) the outer predetermined breaking lines (e.g., along an entire length of the of the respective outer predetermined breaking line or a part thereof). The support rib(s) may for example be arranged on an (e.g., outer) side of the respective outer predetermined breaking lines opposite to the (e.g., inner) side on which the connection predetermined breaking line is arranged (e.g., farther away from a center of the vent structure). The support ribs may protrude from the vent structure (e.g., the base thereof), e.g., in a same direction as the (first and/or second) bent portion and/or in a direction opposite to the direction in which the predetermined breaking lines, if embodied as notches such as scores, are recessed (e.g., if arranged on a same side of the vent structure or base thereof as the notches) or in a same direction as the direction in which the predetermined breaking lines, if embodied as notches such as scores, are recessed (e.g., if arranged on opposite sides of the vent structure or base thereof as the notches).

According to one aspect of the present disclosure, the vent structure may be located in the cap, e.g., in the cap plate. The vent structure may for example cover a vent hole in the cap or may be formed in (e.g., of or by) a portion of the cap.

According to one aspect of the present disclosure, the vent structure may be located in a bottom or side surface of the casing. The vent structure may for example cover a vent hole in the respective surface of the casing. As used herein, the bottom (or lower) surface (or side) of the casing may for example refer to the surface (or side) of the casing opposite to the top/upper surface (or side) of the casing at which the cap is arranged. A side surface may for example refer to a surface (or side) of the casing extending between the top and bottom surface (or sides) of the casing.

According to one aspect of the present disclosure, one or more of the at least one curved portion of the connection predetermined breaking line (e.g., the first curved portion and, if present, optionally the second curved portion) may extend in a curve including two or more segments having different curvatures (e.g., different curvature radii, for example segments extending in arc shapes having different curvature radii).

Said curve may for example have a first segment having a first curvature (e.g., a first curvature radius) and a second segment having a second curvature (e.g., a second curvature radius) different from the first curvature and, optionally, a third segment having a third curvature (e.g., a third curvature radius) different from one or both of the first and second curvatures. For example, the curve may include a first segment having a first curvature radius, a second segment connected to a first end of the first segment and having a second curvature radius and, optionally, a third segment connected to a second end of the first segment opposite to the first end and having a third curvature radius. Optionally, the first curvature radius may be greater than one or both of the second curvature radius and the third curvature radius, e.g., at least 10% larger, in some examples at least 25% larger, in one example at least 50% larger and in one example at least 100% larger than the respective one of the second curvature radius and the third curvature radius (e.g., between 1.1 times to 2.5 times the respective one of the second curvature radius and the third curvature radius).

Put differently, in some examples, the curved line may be formed of a curve including a plurality of curvature radii (e.g., include a plurality of curvature radii).

According to one aspect of the present disclosure, a longitudinal direction (e.g., long/major axis and/or direction of largest extent) of the vent structure may extend parallel to a longitudinal direction of the cap or in a direction at an angle (e.g., perpendicular or substantially perpendicular) to the longitudinal direction of the cap, in particular in case the vent structure is formed in the cap.

Put differently, in some examples, a major axis (e.g., longitudinal axis) direction of the vent structure may extend parallel to a longitudinal direction of the cap plate or a major axis direction of the vent structure may extend in a direction intersecting a longitudinal direction of the cap plate.

Additionally or alternatively, in cases where the vent structure is formed in the casing, the longitudinal direction of the vent structure may extend parallel to a longitudinal direction of a side of the casing that the vent structure is formed in or in a direction at an angle (e.g., perpendicular or substantially perpendicular) to the longitudinal direction of a side of the casing that the vent structure is formed.

According to one aspect of the present disclosure, the connection predetermined breaking line and/or some or all of the outer predetermined breaking lines may be formed as a respective notch.

The vent structure as described herein, optionally in combination with a housing part (for example a casing, a casing part (e.g., bottom or side wall of the casing) and/or a cap) in which the vent structure is formed, may also be provided individually, i.e., not as part of an (e.g., assembled) secondary battery but as a separate part (e.g., separate from the other components of the secondary battery).

Accordingly, the present disclosure also provides a vent structure for use in a secondary battery, wherein the vent structure includes a plurality of outer predetermined breaking lines and a connection predetermined breaking line connecting the outer predetermined breaking lines, and the connection predetermined breaking line includes at least one curved portion extending in a curve.

Said vent structure may additionally comprise any feature or combination of features as described herein for the vent structure of the secondary battery according to the present disclosure.

The present disclosure further provides a housing part for use in a secondary battery, wherein a vent structure is formed in the housing part, the vent structure includes a plurality of outer predetermined breaking lines and a connection predetermined breaking line connecting the outer predetermined breaking lines, and the connection predetermined breaking line includes at least one curved portion extending in a curve.

Said housing part may additionally comprise any feature or combination of features as described herein for the vent structure and/or housing parts of the secondary battery according to the present disclosure.

The housing part may for example be a casing for a secondary battery (e.g., for arranging an electrode assembly of the secondary battery therein), a casing part (e.g., a bottom or side wall of a casing) and/or a cap for a secondary battery (e.g., for coupling to a casing of the secondary battery, for example for covering an opening in a casing for the secondary battery).

**BRIEF DESCRIPTION OF THE DRAWINGS**

The following drawings attached to this specification illustrate preferred embodiments of the present disclosure, and help to further understand the technical spirit of the present disclosure along with the aforementioned contents of the disclosure. Accordingly, the present disclosure should not be construed as being limited to only contents described in such drawings.

FIG. 1 is a perspective view illustrating a secondary battery according to a first embodiment of the present disclosure.

FIG. 2 is a sectional view taken along line II-II of FIG. 1.

FIG. 3 is a top plan view of the secondary battery according to the first embodiment of the present disclosure.

FIG. 4 is a plan view illustrating a vent structure according to the first embodiment of the present disclosure.

FIG. 5 is a sectional view taken along line V-V of FIG. 3.

FIG. 6 is a diagram illustrating part of a connection notch according to the first embodiment of the present disclosure.

FIG. 7 is a perspective view illustrating the vent structure that is in an open state according to the first embodiment of the present disclosure.

FIG. 8 is a perspective view illustrating a vent structure according to a second embodiment of the present disclosure.

FIG. 9 is a sectional view taken along line IX-IX of FIG. 8.

FIG. 10 is a sectional view illustrating a vent structure according to a third embodiment of the present disclosure.

FIG. 11 is a perspective view illustrating a vent structure according to a fourth embodiment of the present disclosure.

FIG. 12 is a sectional view taken along line XII-XII of FIG. 11.

FIG. 13 is a plan view illustrating a vent structure according to a fifth embodiment of the present disclosure.

FIG. 14 is a perspective view illustrating a vent structure according to a sixth embodiment of the present disclosure.

FIG. 15 is a sectional view of FIG. 14.

FIG. 16 is a sectional view taken along line A3-A3 of FIG. 14.

FIG. 17 is a sectional view taken along line A4-A4 of FIG. 14.

FIG. 18 is a sectional view taken along line A5-A5 of FIG. 14.

FIG. 19 is a perspective view illustrating a vent structure according to a seventh embodiment of the present disclosure.

FIG. 20 is a sectional view taken along line A6-A6 of FIG. 19.

FIG. 21 is a bottom perspective view illustrating a vent structure according to a eighth embodiment of the present disclosure.

FIG. 22 is a sectional view taken along line A7-A7 of FIG. 21.

FIG. 23 is a sectional view illustrating a portion of a vent structure in which a connection notch and a first side notch are located, according to a ninth embodiment of the present disclosure.

FIG. 24 is a sectional view illustrating a portion of the vent structure in which the connection notch and a second side notch are located, according to the ninth embodiment of the present disclosure.

FIG. 25 is a sectional view illustrating a portion of a vent structure in which a connection notch and a first side notch are located, according to a tenth embodiment of the present disclosure.

FIG. 26 is a sectional view illustrating a portion of the vent structure in which the connection notch and a second side notch are located, according to the tenth embodiment of the present disclosure.

FIG. 27 is a perspective view illustrating a secondary battery according to an eleventh embodiment of the present disclosure.

FIG. 28 is a diagram illustrating a vent protection film according to the eleventh embodiment of the present disclosure.

FIG. 29 is a sectional view taken along line XVI-XVI of FIG. 27.

FIG. 30 is a perspective view illustrating a secondary battery according to a twelfth embodiment of the present disclosure.

FIG. 31 is a perspective view illustrating a secondary battery according to an thirteenth embodiment of the present disclosure.

FIG. 32 is a top plan view illustrating a secondary battery according to a fourteenth embodiment of the present disclosure.

FIG. 33 is a plan view illustrating the vent structure of FIG. 32.

**Detailed description**

Since the present disclosure may be modified in various forms, and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

For ease of description, various features and elements of the present disclosure may be disclosed in combination in the embodiments described below. Unless mentioned otherwise, this does, however, not imply any functional or structural link between the respective features and elements. Each individual one of the features and elements (and each combination of features and elements) described below may also be present in the vent structure, the housing part and/or the secondary battery according to the present disclosure in isolation and separate from the other features and elements of the respective embodiment. This applies in particular to the vent structure (optionally in combination with the housing part (e.g., casing or cap) in which the vent structure is formed), which may also be provided individually, i.e., not as part of an (e.g., assembled) secondary battery but as a separate part (e.g., separate from the other components of the secondary battery).

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "comprise", "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

Hereinafter, embodiments of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements may be enlarged, omitted, or depicted schematically.

Hereinafter, a secondary battery and a vent structure according to an embodiment of the present disclosure will be described.

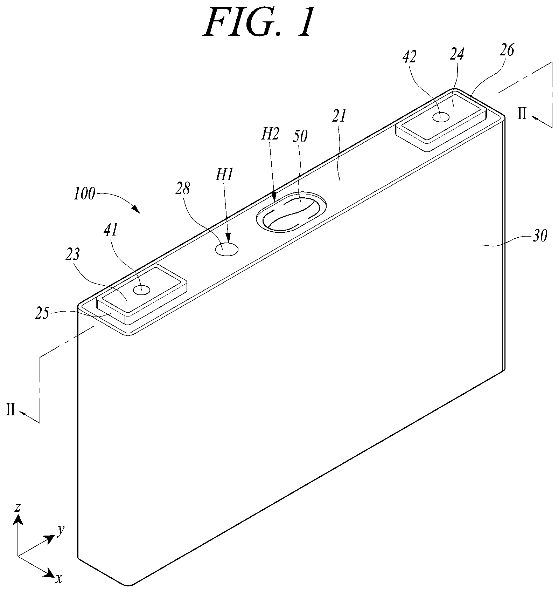

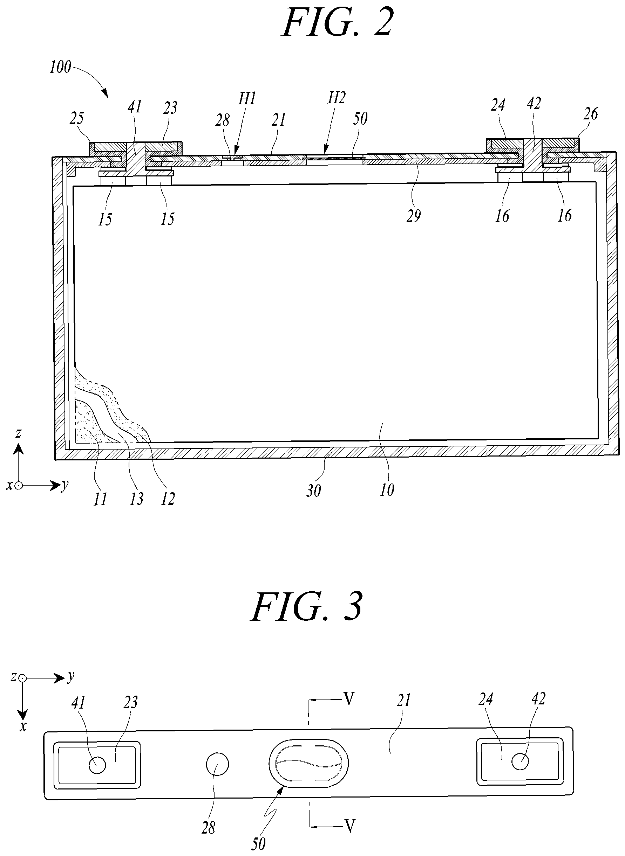

FIG. 1 is a perspective view illustrating a secondary battery and a vent structure according to a first embodiment of the present disclosure. FIG. 2 is a sectional view taken along line II-II of FIG. 1. FIG. 3 is a top plan view of the secondary battery according to the first embodiment of the present disclosure.

Referring to FIGS. 1 to 3, a secondary battery 100 according to the present embodiment may include an electrode assembly 10. The electrode assembly 10 may include a plurality of positive electrodes 11 and a plurality of negative electrodes 12.

The secondary battery 100 may further include a casing 30 that accommodates the electrode assembly 10 and a cap 21 coupled to the casing 30. As in the example of Figs. 1 to 3, the cap 21 may embodied as a cap plate and may thus also be referred to as the cap plate 21, noting that all features described in the following with reference to the cap plate 21 may also be present in other embodiments, where the cap 21 is embodied differently.

The secondary battery 100 may further include terminals 23 and 24 provided on the cap plate 21 and, optionally, an upper insulator 29 placed between the cap plate 21 and the electrode assembly 10.

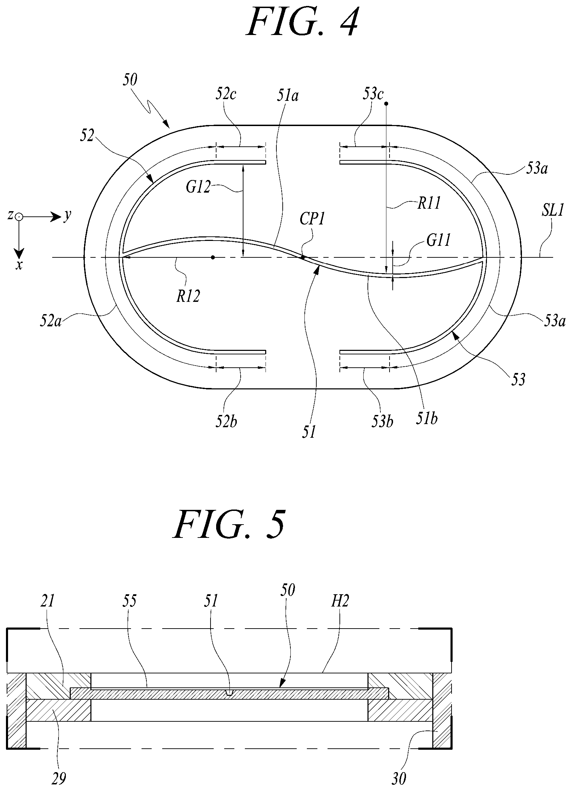

The secondary battery 100 may further include a vent structure 50 provided in the cap plate 21, e.g., as detailed below with reference to FIGS. 4 to 7.

The electrode assembly 10 may perform charging and discharging. The electrode assembly 10 may be implemented in various forms such as an all-solid-state electrode assembly, a lithium-ion electrode assembly, or a sodium-ion electrode assembly.

The electrode assembly 10 may include the positive electrodes 11, the negative electrodes 12, and separators 13 interposed between the positive electrode 11 and the negative electrode 12. The positive electrode 11, the separator 13, and the negative electrode 12 may be formed in a stacked structure, and/or may be provided in a wound structure, for example in a jelly-roll form.

In addition, the electrode assembly 10 may have a structure in which the positive electrode 11 and the negative electrode 12 are alternately inserted between portions of the separator 13, which may for example be bent in a zigzag shape.

The separator may for example be any material such as an electrically nonconductive polymer or ceramic material which keeps positive and negative electrodes apart while allowing permeation of electrolyte and/or the transport of charge carriers. The electrode assembly 10 may also be implemented in various forms such as an all-solid-state type that has no (distinct) separator, e.g., where a solid electrolyte may act as both an electrolyte and a separator.

Each of the positive electrode 11 and the negative electrode 12 may include a coated portion, which is a region where an active material is applied onto a metal substrate (e.g., a metal foil), and an uncoated portion where the active material is not applied. An electrode may also be formed without any active material coating present during initial construction of the electrode assembly 10 of battery 100 such as an anodeless arrangement. A positive uncoated portion 15 may protrude from a side end of the positive electrode 11. A negative uncoated portion 16 may protrude from a side end of the negative electrode 12. The positive uncoated portion 15 and the negative uncoated portion 16 may protrude in the same direction. The positive uncoated portion 15 and the negative uncoated portion 16 may protrude in a direction toward the cap plate 21 (in a z-axis direction), or the positive uncoated portion 15 and the negative portion 16 may protrude in different directions.

As used herein, the z-axis direction (which may also be referred to as the vertical direction) may for example be a direction perpendicular to the cap or cap plate 21 (or the corresponding opening in the casing 30), e.g., perpendicular to a surface, in particular a main surface of the cap or cap plate 21. The x-axis and y-axis directions (which may also be referred to as horizontal directions or horizontal plane) may for example be directions parallel to the cap or cap plate 21 (e.g., parallel to a surface, in particular a main surface of the cap or cap plate 21)/the corresponding opening in the casing 30. The x-axis direction and the y-axis direction may for example be along a short axis and/or direction of smallest horizontal extent and a (horizontal) long axis and/or direction of largest horizontal extent, respectively, of the cap/cap plate 21 and/or of the casing 30.

With regard to the casing 30, the direction perpendicular to the cap or cap plate 21/the corresponding opening of the casing 30 (which may coincide with the z-axis direction) may be referred to as a length direction of the casing 30. The direction of smallest extent and/or short axis of the casing 30 in the plane perpendicular to the length direction may also be referred to a thickness direction of the casing 30, which may coincide with the x-axis direction. The direction of largest extent (physical dimension) and/or of a long axis of the casing 30 in the plane perpendicular to the length direction may also be referred to a width direction of the casing 30, which may (or may not) be perpendicular to the thickness direction and/or may coincide with the y-axis direction. The direction of (overall) largest extent and/or of an (overall) long axis of the casing 30 may for example be the length direction or the width direction. The same nomenclature may be used with regard to the electrode assembly 10.

With regard to other objects (e.g., parts, structures, elements and the like), in particular those that may have a planar or substantially planar shape (such as the cap plate 21 and the vent structure 50), the direction of largest extent (physical dimension) and/or of a long axis of the respective object may be referred to as a longitudinal direction (or length direction) of the respective object. The direction of smallest extent of the respective object (e.g., the direction perpendicular to the main plane of the object) may be referred to as a thickness direction of the respective object. A direction of smallest extent and/of a short axis of the respective object in the plane perpendicular to the thickness direction (lateral extent) may be referred to as a width direction (or lateral direction) of the object.

The positive uncoated portion 15 and the negative uncoated portion 16 may each be formed in a tab shape. The positive uncoated portion 15 and the negative uncoated portion 16 may be spaced apart from each other in the width direction (y-axis direction) of the casing 30. Positive uncoated portions 15 and negative uncoated portions 16 may be stacked in the thickness direction (x-axis direction) of the casing 30.

Furthermore, the positive uncoated portion 15 may be connected to the first terminal 23 via a current collector 41. The negative uncoated portion 16 may be connected to the second terminal 24 by a current collector 42.

The separator 13 may be disposed between the positive electrode 11 and the negative electrode 12. The separator 13 may prevent a short circuit (e.g., between the positive electrode 11 and the negative electrode 12) and may allow movement of ions. In the case where the secondary battery 100 is implemented as an all-solid-state battery, a solid electrolyte may be positioned between the positive electrode 11 and the negative electrode 12 instead of the separator 13.

The casing 30 may have a box shape, for example a quadrilateral (quadrangular) prismatic shape such as a rectangular cuboid. The casing 30 may have an internal space capable of accommodating the electrode assembly 10. The casing 30 may be formed in various shapes such as a prismatic shape or a cylindrical shape. The single electrode assembly 10 may be inserted into the casing 30, or a plurality of electrode assemblies 10 may be inserted thereinto.

The secondary battery 100 may be a can-type battery, wherein the casing 30 may be made of a rigid material, in particular metal.

An electrolyte may be accommodated together with the electrode assembly 10 in the casing 30. The electrolyte may be in a liquid, solid, and/or gel phase.

The cap plate 21 may be formed of a plate covering an opening of the casing 30. The cap plate 21 may have a shape corresponding to that of the opening of the casing 30. The cap plate 21 may be fixed to the casing 30, for example by welding.

An electrolyte injection hole H1 for injecting an electrolyte may be formed in the cap plate 21. A sealing plug 28 that seals the electrolyte injection hole H1 may be provided in the electrolyte injection hole H1.

A vent hole H2 in which a vent structure 50 is installed may be formed in the cap plate 21. The vent structure 50 formed in the vent hole H2 may be configured to open at a pressure equal to or greater than a preset pressure.

The upper insulator 29 may be placed under the cap plate 21. The upper insulator 29 may be formed of a plate parallel to the cap plate 21. The upper insulator 29 may extend in a longitudinal direction (long axis and/or direction of largest extent) of the cap plate 21 (which may coincide with the y-axis direction in FIGS. 1 to 3).

The terminals 23 and 24 may be coupled to the cap plate 21. One or two terminals 23 and 24 may be provided on the cap plate 21. In the case where two terminals 23 and 24 are provided on the cap plate 21, the first terminal 23 may function as a positive electrode terminal, and the second terminal 24 may function as a negative electrode terminal. In the case where only one terminal is provided on the cap plate 21, the casing 30 may serve as the negative electrode through electrical connection. In some examples, the electrode terminals may also be reversed.

The first terminal 23 and the second terminal 24 may each be formed in a plate shape. Alternatively, any shape that allows for an effective electrical connection to an external load may be used including, but not limited to, a rod, tube, stud, post, button, or pin. The first terminal 23 and the second terminal 24 may be bent or straight.

A gasket 25 for insulation may be provided between the first terminal 23 and the cap plate 21. A gasket 26 for insulation may also be provided between the second terminal 24 and the cap plate 21. The gaskets 25 and 26 may extend downward (e.g., through the cap plate 21) to be also located between the current collectors 41 and 42 and the cap plate 21. The gaskets 25 and 26 may be formed as a single component or may be divided into a plurality of components.

The first terminal 23 may be electrically connected to the positive uncoated portion 15 via the first current collector 41. The second terminal 24 may be electrically connected to the negative uncoated portion 16 via the second current collector 42.

The first terminal 23 and the second terminal 24 may be formed in a plate shape. A hole into which a connection post of the first current collector 41 or the second current collector 42 is inserted may be formed in a central portion of each of the first terminal 23 and the second terminal 24.

The electrode assembly 10 may include two positive uncoated portion arrays having the same polarity. The positive uncoated portion arrays may be arranged so as not to overlap in the width direction (which may coincide with the y-axis direction in the figures) and the thickness direction (which may coincide with the x-axis direction in the figures) of the electrode assembly 10. The positive uncoated portion arrays may be welded to the first current collector 41.

Additionally or alternatively, the electrode assembly 10 may include two negative uncoated portion arrays having the same polarity. The negative uncoated portion arrays may be arranged so as not to overlap in the width direction (y-axis direction) and the thickness direction (x-axis direction) of the electrode assembly 10. The negative uncoated portion arrays may be welded to the second current collector 42.

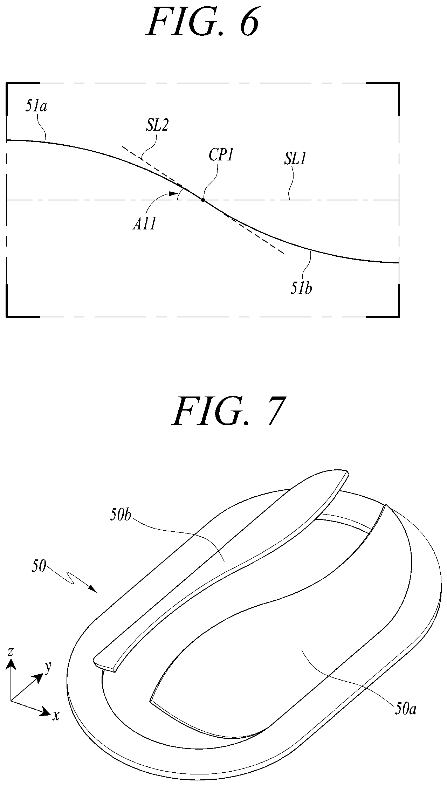

FIG. 4 is a plan view illustrating the vent structure according to the first embodiment of the present disclosure. FIG. 5 is a sectional view taken along line V-V of FIG. 3. FIG. 6 is a diagram illustrating part of a connection notch according to the first embodiment of the present disclosure. FIG. 7 is a perspective view illustrating the vent structure that is in an open state according to the first embodiment of the present disclosure.

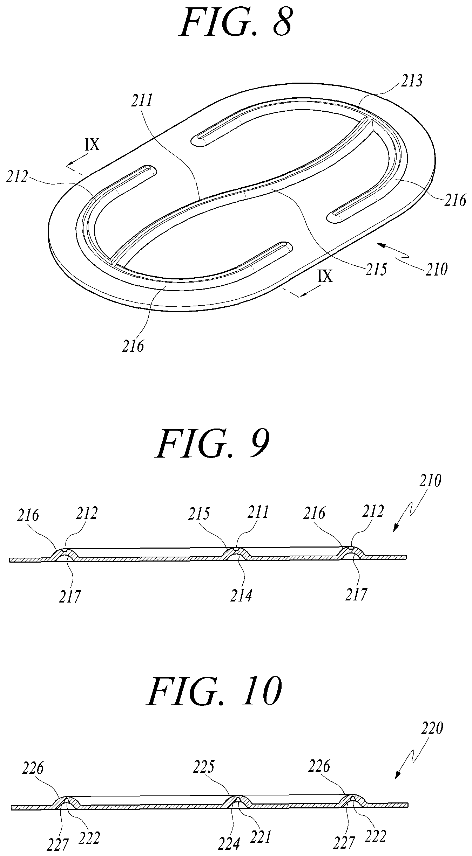

The vent structure of FIGS. 4 to 7 may be comprised in the secondary battery 100 according to the first embodiment of the present disclosure and/or may be provided as a separate part (optionally in combination with a housing part such as the cap or cap plate 21 for use in a secondary battery). In other examples, the secondary battery 100 according to the first embodiment of the present disclosure may comprise a different vent structure according to the present disclosure, in particular any one of the vent structures according to the second to fourteenth embodiments of the present disclosure described below with reference to FIGS. 8 to 32.

Referring to FIGS. 4 to 7, the vent structure 50 is formed in a plate shape (e.g., includes a base formed in a plate shape). The vent structure 50 may be configured to open at a pressure equal to or greater than a preset pressure. The vent structure 50 may be formed as a track-shaped plate (e.g., a track/racetrack-shaped base plate) in which two arcs are connected by a straight line. However, the present disclosure is not limited thereto and other shapes including round and/or straight sides can be used such as square, rectangle, polygon, or circle.

The vent structure 50 may extend a predetermined length in a longitudinal direction of the cap plate 21 (which may coincide with the y-axis direction in the figures). The vent structure 50 may have a major axis direction corresponding to a longitudinal direction of the vent structure 50 and a minor axis direction corresponding to a width direction of the vent structure 50. The major axis direction of the vent structure 50 may extend parallel to the longitudinal direction of the cap plate 21 (y-axis direction). The minor axis direction of the vent structure 50 may extend parallel to the width direction of the cap plate 21 (x-axis direction).

A plane spanned by the longitudinal direction and the width direction (e.g., the major and minor axis directions) of the vent structure 50 may be referred to as the plane of the vent structure 50 (or the plane of the base of the vent structure 50/the plane to which the base of the vent structure 50 is parallel). The plane of the vent structure 50 may be perpendicular to a thickness direction/direction of smallest extent of the vent structure 50. The plane of the vent structure may coincide with or be parallel to a plane that the notches/predetermined breaking lines are arranged in (e.g., extend in). The plane of the vent structure may be perpendicular to the direction of view / z-axis direction in Fig. 4 (i.e., correspond to the x-y-plane of Fig. 4).

The vent structure 50 may be fixed to the cap plate 21, for example by welding or any other method of securely fixing the vent structure 50 to the cap plate 21. The vent structure 50 may be fixed to a lower surface of the cap plate 21, and/or may be fixed to an upper surface of the cap plate 21. The vent structure may be sandwiched between upper and lower portions of the cap plate to fix the vent structure 50 to the cap plate 21.

The vent structure 50 may include predetermined breaking lines 51, 52, and 53, which may, e.g., create weakened portions of the vent structure material with respect to an adjacent or surrounding portion.

Some or all of the predetermined breaking lines may be embodied as notches, for example scores. The predetermined breaking lines 51, 52, and 53 may for example be in the form of notches (e.g., scores) 51, 52, and 53 having a groove shape in the surface of the vent structure material and/or the predetermined breaking lines (e.g., the notches/scores) may be formed by weakening the vent structure material such as chemically, thermally, by compression, and/or with radiation.

The vent structures according to various embodiments (such as the vent structures 50, 130, 150, 140, 160, 180, 190, 210, 220, 230, and 240) will hereinafter be further described in terms of the use of notches (e.g., by scoring the vent material with scores) as examples of predetermined breaking lines. However, it will be understood that any of the notches hereinafter disclosed may alternatively or additionally include (or be) another type of predetermined breaking line which produces the weakened portion of vent structure material.

The notches 51, 52, and 53 may be configured to easily fracture when a preset predetermined fracture pressure is reached within the battery. The pressure may be a pressure difference between the inside and outside of the battery 100 and may be generated by, for example, gas formation within the battery or by expansion of the electrolyte and/or the electrode assembly 10. In the additional examples, notches (such as notches 211, 212, 213; 231, 232, 233; 241, 242, 243; 131; 141, 142, 143; and 121, 122, 123) may have a similar structure to notches 51, 52, and 53, that may, e.g., be in the form of scores.

The vent structure 50 may include two side notches (e.g., lateral scores) 52 and 53 (as examples of outer predetermined breaking lines) and a connection notch 51 (as an example of a connection predetermined breaking line) that connects the side notches 52 and 53. Each of the connection notch 51 and the side notches 52 and 53 may be formed as an elongated groove, and/or may be formed as a groove having a trapezoidal longitudinal-sectional shape (e.g., a trapezoidal cross-section of the longitudinal direction). However, the present disclosure is not limited thereto, and each of the connection notch 51 and the side notches 52 and 53 may have various longitudinal-sectional shapes such as a triangular shape, and/or an arc shape.

While the predetermined breaking lines are embodied as notches in this example, the present disclosure is not limited thereto. Some or all of the predetermined breaking lines may also be embodied as other forms of structurally weakened portions of the vent structure 50. Any feature or combination of features of the notches described in the following may also be present for predetermined breaking lines embodied in such other fashions.

Furthermore, the connection notch 51 and the side notches 52 and 53 may be fractured at a preset pressure (e.g., be configured to break at the preset pressure).

As illustrated in FIG. 5, a recess (base recess) 55 may be formed in the vent structure 50 (e.g., in the base thereof). The connection notch 51 and the side notches 52 and 53 may be formed in a bottom of the base recess 55 (e.g., in the base of the vent structure 50 as illustrated in FIG. 5), wherein the bottom of the base recess 55 may for example be flat as in the example of FIG. 5.

The connection notch 51 may include a first curved portion (also referred to as first curved line) 51a and a second curved portion (also referred to as second curved line) 51b that are formed of curves (e.g., that are extending in a curve, for example forming a bend). The first curved line 51a and the second curved line 51b may be formed in an arc shape. The first curved line 51a and the second curved line 51b may protrude convexly in different directions (e.g., within the plane of the vent structure 50 / perpendicular to the direction of view in Fig. 4). For example, a line that protrudes in a direction may be bowed out in the direction that the line protrudes to form a bulge of the line in the direction that the line protrudes.

The first curved line 51a may protrude convexly toward one side edge of the vent structure 50 (e.g., in a x-axis direction, for example a negative x-axis direction as illustrated in Fig. 4, which may coincide with the width direction of the vent structure 50). The second curved line 51b may protrude convexly toward another side edge of the vent structure 50 (e.g., in the x-axis direction, for example a positive x-axis direction as illustrated in Fig. 4). Accordingly, the first curved line 51a and the second curved line 51b may protrude convexly in opposite directions to form a wave shape or an S-shape (e.g., within the plane of the vent structure 50 / perpendicular to the direction of view in Fig. 4).

Here, an inflection point CP1 (as an example of an inflection portion) at which the first curved line 51a and the second curved line 51b meet may be formed at a center in the longitudinal direction of the connection notch 51. In addition, the first curved line 51a and the second curved line 51b may have the same curvature radius. For example, the first curved line 51a and the second curved line 51b may be formed to have a first curvature radius R11. Accordingly, the connection notch 51 may be formed in point symmetry with respect to the inflection point CP1.

The two side notches 52 and 53 may be formed to protrude convexly in opposite directions (e.g., within the plane of the vent structure 50 / perpendicular to the direction of view in Fig. 4), for example protruding convexly outward in the longitudinal direction of the vent structure 50 (e.g., the first side notch 52 in the negative y-direction and the second side notch 53 in the positive y-direction). The connection notch 51 is connected to the first side notch 52 and the second side notch 53 (e.g., a center portion or center point thereof). The first side notch 52 and the second side notch 53 may have the same structure and be arranged in line symmetry (e.g., with respect to a line parallel to the width direction of the vent structure 50 such as along the x-direction in Fig. 4), for example, as mirror images of each other.

The first side notch 52 may include a curved portion 52a that may, e.g., be curved in an arc shape. The first side notch 52 may further include a first linear portion 52b that is connected to one end of the curved portion 52a and extends linearly (e.g., along the longitudinal direction of the vent structure 50 such as along the y-direction in Fig. 4), and a second linear portion 52c that is connected to a remaining end of the curved portion 52a and extends linearly (e.g., along the longitudinal direction of the vent structure 50 such as along the y-direction in Fig. 4).

The first linear portion 52b and the second linear portion 52c may extend in the longitudinal direction of the cap plate 21 (y-axis direction). The first linear portion 52b and the second linear portion 52c may be arranged parallel to each other. The curved portion 52a may be formed in an arc having a second curvature radius R12. The curved portion 52a (and/or the linear portions 52b, 52c) may be configured to partially enclose the connection notch 51.

The second side notch 53 may include a curved portion 53a that may, e.g., be curved in an arc shape. The second side notch 53 may further include a first linear portion 53b that is connected to one end of the curved portion 53a and extends linearly (e.g., along the longitudinal direction of the vent structure 50 such as along the y-direction in Fig. 4), and a second linear portion 53c that is connected to a remaining end of the curved portion 53a and extends linearly (e.g., along the longitudinal direction of the vent structure 50 such as along the y-direction in Fig. 4).

Furthermore, the connection notch 51 may be connected to longitudinal central portions of the first side notch 52 and the second side notch 53 (e.g., to the curved portions 52a, 53a and in particular central portions or central points thereof).

The first side notch 52 and the second side notch 53 may be spaced apart from each other by a distance (i.e., spatially separated by a gap). The first side notch 52 and the second side notch 53 may be formed to partially enclose (e.g., surround) the connection notch 51. Here, the first side notch 52 and the second side notch 53 may for example enclose 50% to 90% of the connection notch 51 (e.g., enclose the connection notch 51 along 50% to 90% of its length). A length (longitudinal extent) of the first side notch 52 and/or a length (longitudinal extent) of the second side notch 53 along a longitudinal direction of the connection notch 51 (e.g., as defined by the two end points thereof, which may coincide with the longitudinal direction of the vent structure 50) may each for example be between 10 % and 50%, in some examples between 25% and 45% of a length of the connection notch 51 (in the longitudinal direction thereof).

A first distance G11, which is a maximum distance between the connection notch 51 and a (virtual) reference line SL1 positioned at a center in the width direction (x-axis direction) of the vent structure 50 and extending in the longitudinal direction (y-axis direction) of the vent structure 50, may be 0.05 times to 0.4 times a second distance G12, which is a maximum distance from the virtual reference line SL1 to the first side notch 52 (e.g., one or both of the linear portions 52b, 52c thereof). As illustrated in Fig. 4, the reference line SL1 may extend through a center of the vent structure 50 (which may coincide with the inflection point CP1) and parallel to the length direction (direction of largest extent) of the vent structure 50 (e.g., along the y-direction of Fig. 4).

As illustrated in FIG. 6, an inclination angle A11 of an acute angle formed by a tangent line SL2 (to the connection notch 51, for example to the inflection portion thereof) and a virtual reference line SL1 that meet at the inflection point CP1 may range from 5 degrees to 60 degrees. In an embodiment, the inclination angle A11 of the acute angle may range from 10 degrees to 30 degrees.

The first curvature radius R11 and the second curvature radius R12 may be formed to be different from each other. The first curvature radius R11 may be greater than the second curvature radius R12. The first curvature radius R11 may be 1.1 times to 5.5 times the second curvature radius R12. Moreover, the first curvature radius R11 may be 1.8 times to 2.2 times the second curvature radius R12.

In the case where the first curvature radius R11 is greater than the second curvature radius R12, a line of the connection notch 51 may extend as a gentle curve. Hence, when the connection notch 51 is fractured, the connection notch 51 may be easily fractured along the curve.

In the case where the first curvature radius R11 is smaller than the second curvature radius R12, there may be a problem in that vent pieces 50a and 50b, which are fractured and folded (as illustrated in FIG. 7), may have an excessively large height deviation. If the height deviation of the vent pieces 50a and 50b is large, a higher portion thereof may come into contact with an upper structure, resulting in a failure to open properly, or requiring a large space to be secured above the vent pieces 50a and 50b.

In the case where the connection notch 51 extends along a curve similar to an S-shape (e.g., when including two curved portions 51a, 51b protruding convexly in opposite directions), an area subjected to pressure may increase compared to a straight line, so that the connection notch 51 can be accurately and easily fractured at a preset fracture pressure. In addition, when fractured, the connection notch 51 can be easily and rapidly fractured along the curve.

The curved portions 52a and 53a of the side notches 52 and 53 may be fractured (configured to be fractured), while the first linear portions 52b and 53b and the second linear portions 52c and 53c may be folded rather than being fractured (configured to be folded rather than being fractured). Because the first linear portions 52b and 53b and the second linear portions 52c and 53c are present, the vent pieces 50a and 50b may be easily bent to rapidly secure a discharge space. In addition, depending on an environment where the fracture occurs, the first linear portions 52b and 53b and/or the second linear portions 52c and 53c may be partially or fully fractured.

In some cases, the connection notch 51 may not be fractured, and the side notches 52 and 53 may be fractured first. In this case, the curved portion(s) 52a, 52b, the first linear portions 52b and 53b, and the second linear portions 52c and 53c may all be fractured, thereby forming two openings on opposite sides, and securing sufficient space for gas discharge.

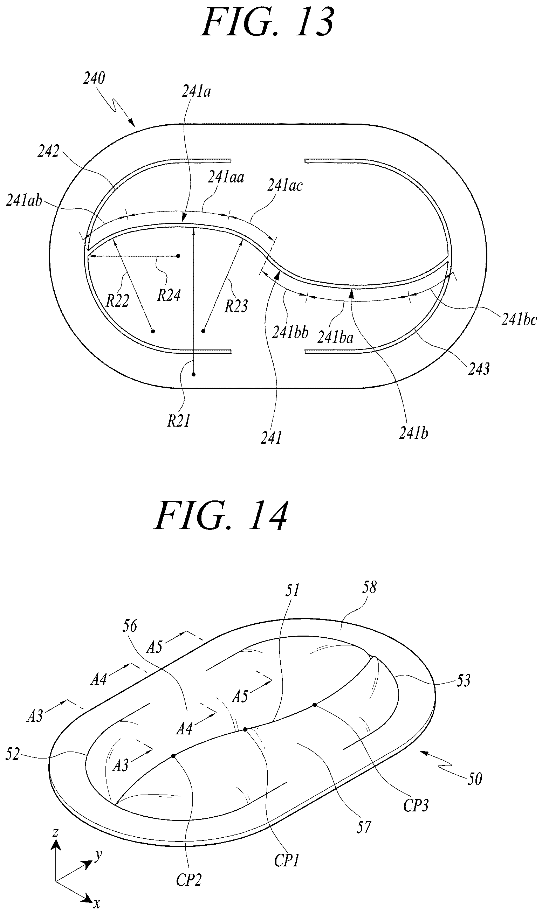

The base of the vent structure 50 (e.g., at least a portion thereof between the connection notch 51 and the side notches 52, 53) may be flat, for example as illustrated in Fig. 5. In other examples, the base may comprise one or more bent portions (also referred to as convex portions), e.g., domed, dished or curved portions, arranged between (e.g., extending between and/or enclosed by) the connection notch 51 and the side notches 52, 53, for example as detailed below with reference to FIGS. 14 to 26 . The bent portion(s) may for example bend towards (e.g., protrude in) a direction from the first side to the second side of the base or vice-versa (e.g., a thickness direction of the vent structure 50), for example in a direction to the side of the base in and/or on which the connection notch 51 and the side notches 52, 53 are formed (for example upwards in Fig. 5).

For example, a first bent portion (first convex portion) may be arranged on one side of the connection notch 51, e.g., between the connection notch 51, the curved portion 52a and the linear portion 52b of the side notch 52 and the curved portion 53a and the linear portion 53b of the side notch 53. A second bent portion (second convex portion) may be arranged on another side of the connection notch 51, e.g., between the connection notch 51, the curved portion 52a and the linear portion 52c of the side notch 52 and the curved portion 53a and the linear portion 53c of the side notch 53.

Hereinafter, a secondary battery and a vent structure according to a second embodiment of the present disclosure will be described.

FIG. 8 is a perspective view illustrating a vent structure according to a second embodiment of the present disclosure. FIG. 9 is a sectional view taken along line IX-IX of FIG. 8.

In the following description, with reference to FIGS. 8 and 9, a secondary battery according to the second embodiment has the same structure as the secondary battery according to the first embodiment, except for a vent structure 210 (which may, e.g., be provided instead of or in addition to the vent structure 50); therefore, a redundant description of the same configuration will be omitted.

The vent structure 210 may include two side notches 212 and 213 (as an example of outer predetermined breaking lines), and a connection notch 211 (as an example of a connection predetermined breaking line) that connects the side notches 212 and 213.

The vent structure 210 may include a base, e.g., a racetrack shaped base plate as illustrated in FIG. 8, in which the connection notch 211 and the side notches 212, 213 may be formed. The base may have a first side (e.g., the side facing upwards in the example of FIGS. 8 and 9) and a second side opposite to the first side (e.g., the side facing downwards in the example of FIGS. 8 and 9). The first side of the base may for example face outwards (e.g., toward an outside of the casing of the secondary battery) and the second side of the base may for example face inwards (toward an interior or inner side of the casing), or vice-versa.

The vent structure 210 may include a first elongate protrusion (which may also be referred to as first linear protrusion) 215 that extends in a longitudinal direction of the connection notch 211 (e.g., along the connection notch 211). The first linear protrusion 215 may protrude convexly (e.g., from the first side of the base of the vent structure 210 as illustrated in FIGS. 8 and 9).

The vent structure 210 may further include second elongate protrusions (which may also be referred to as second linear protrusions) 216 that extend in longitudinal directions of the respective side notches 212 and 213 (e.g., along the respective side notches 212 and 213). The second linear protrusions 215 may protrude convexly (e.g., from the first side of the base of the vent structure 210 as illustrated in FIGS. 8 and 9). The vent structure 210 may include the two second linear protrusions 216 (e.g., one along the first side notch 212 and another one along the second side notch 213). The second linear protrusions 216 may be connected to the first linear protrusion 215 (e.g., at the points where the connection notch 211 is connected to the side notches 212, 213).

For example, the first elongate protrusion 215 and second elongate protrusions 216 that protrude convexly may protrude convexly from a surface (e.g., base) of the vent structure 210. The first elongate protrusion 215 and second elongate protrusions 216 may, for example, be formed as ridges protruding from the surface of the vent structure 210. The first elongate protrusion 215 and second elongate protrusions 216 may each have a constant height of an uppermost portion along the lengths thereof. The first elongate protrusion 215 and second elongate protrusion 216 may have heights of the uppermost portions that vary along the lengths thereof. The height, or maximum height, or minimum height of the first elongated protrusion 215 and the second elongated protrusions 216 may be the same or different.

In addition, a first groove (which may also be referred to as first linear groove) 214 may be formed in a surface opposite to the first linear protrusion 215 (e.g., the second side of the base of the vent structure 210 as illustrated in FIG. 9). A second groove (which may also be referred to as second linear groove) 217 may be formed in a surface opposite to each of the second linear protrusions 216 (e.g., the second side of the base of the vent structure 210 as illustrated in FIG. 9). The first and second linear grooves 214, 217 may extend along the first linear protrusion 215 and the second linear protrusions 216, respectively (e.g., may form corresponding counterparts thereto on the second side of the base, which may for example be formed by respective deformations of the base, e.g., an indentation thereof).

The connection notch 211 may be formed in the first linear protrusion 215. The connection notch 211 may for example be positioned at an uppermost portion of the first linear protrusion 215 (e.g., facing away from the first side of the base).

The side notches 212 and 213 may be formed in the second linear protrusions 216. The side notches 212 may for example be positioned at uppermost portions of the second linear protrusions 216 (e.g., facing away from the first side of the base).

Longitudinal-sections (e.g., cross-sections of the longitudinal direction) of the first linear protrusion 215 and the second linear protrusions 216 (e.g., lateral sections perpendicular to a path along which the first linear protrusion 215 and the second linear protrusions 216 extend) may each be formed in an arc shape or a triangular shape. Other shapes may be used as well.

In some examples, the connection notch 211 may also be positioned along the first elongate protrusion 215 at a height that is not the highest part of the first elongate protrusion 215. A portion of the connection notch 211 may be positioned at an uppermost portion of the elongate protrusion 215 and a portion of the connection notch 211 may be positioned along the first elongate protrusion 215 at a height that is not the highest part of the first elongate protrusion 215.

Additionally or alternatively, the side notches 212 and 213 may also be positioned along the second elongate protrusion 216 at a height that is not the highest part of the second elongate protrusion 216. A portion of either or both of the side notches 212 and 213 may be positioned at an uppermost portion of the second elongate protrusion 216 and a portion of either or both of the side notches 212 and 213 may be positioned along the second elongate protrusion 216 at a height that is not the highest part of the second elongate protrusion 216.

A width of the connection notch 211 may be smaller than, in some examples substantially smaller than (e.g., less than 50% of), a width of one or both of the first linear protrusion 215 and the first linear groove 214. A width of the side notches 212, 213 may be smaller than, in some examples substantially smaller than (e.g., less than 50% of), a width of one or both of the respective second linear protrusion 215 and the respective second linear groove 214.

Apart from being formed in the first and second linear protrusions 215, 216, the connection notch 211 and the sides notches 212, 213 may for example be embodied as described above for the vent structure 50, e.g., with corresponding curved portions and/or linear portions.

In the case where the first linear protrusion 215 and the second linear protrusions 216 are formed as in the second embodiment, the connection notch 211 and the side notches 212 and 213 may be easily fractured when needed.

Hereinafter, a secondary battery and a vent structure according to a third embodiment of the present disclosure will be described.

FIG. 10 is a sectional view illustrating a vent structure according to the third embodiment of the present disclosure.

In the following description, with reference to FIG. 10, the secondary battery according to the third embodiment has the same structure as the secondary battery according to the first embodiment, except for a vent structure 220 (which may, e.g., be provided instead of or in addition to the vent structure 50 and/or 210); therefore, a redundant description of the same configuration will be omitted.

The vent structure 220 may include two side notches 222 (as an example of outer predetermined breaking lines) and a connection notch 221 (as an example of a connection predetermined breaking line) that connects the side notches 222.

The vent structure 220 may include a base (e.g., similar to the one of the vent structure 210), in which the connection notch 211 and the side notches 212, 213 may be formed. The base may have a first side (e.g., the side facing upwards in the example of FIG. 10) and a second side opposite to the first side (e.g., the side facing downwards in the example of FIG. 10).

The vent structure 220 may include a first elongate protrusion (which may also be referred to as first linear protrusion) 225 that extends in a longitudinal direction of the connection notch 221. The first linear protrusion 225 may protrude convexly (e.g., from a first side of a base of the vent structure 220). The vent structure 220 may further include second elongate protrusions (which may also be referred to as second linear protrusions) 226 that extend in longitudinal directions of the respective side notches 222. The second linear protrusions 226 may protrude convexly (e.g., from the first side of the base of the vent structure 220).

The vent structure 220 may include the two second linear protrusions 226. The second linear protrusions 226 may be connected to the first linear protrusion 225, e.g., as described above for the vent structure 210.

A first groove (which may also be referred to as first linear groove) 224 may be formed in a surface opposite to the first linear protrusion 225 (e.g., the second side of the base of the vent structure 220). A second groove (which may also be referred to second linear groove) 227 may be formed in a surface opposite to each of the second linear protrusions 226 (e.g., the second side of the base of the vent structure 220).

The first and second linear protrusions 226, 227 and/or the first and second grooves 224, 227 may for example be embodied as described above for the vent structure 210.

The first linear groove 224 and the second linear groove 227 may be formed in a surface of the vent structure 220 (e.g., a surface of the second side of the base of the vent structure 220) that faces an inner side of the casing. The first linear groove 224 may extend in the longitudinal direction of the connection notch 221 (e.g., along the connection notch 221). The first linear groove 224 may have a recessed structure in a concave shape. The second linear groove 227 may extend in the longitudinal direction of the side notch 222 (e.g., along the side notch 222). The second linear groove 227 may have a recessed structure in a concave shape.

The connection notch 221 may be positioned in a bottom of the first linear groove 224. The side notches 222 may be positioned in bottoms of the respective second linear grooves 227. The connection notch 221 and the side notches 222 may be formed in the surface of the vent structure 220 that faces the inner side of the casing.

Apart from being formed in the first and second linear grooves 224, 227, the connection notch 211 and the sides notches 212, 213 may for example be embodied as described above for the vent structure 50 and/or 210, e.g., with corresponding curved portions and/or linear portions.

Hereinafter, a secondary battery and a vent structure according to a fourth embodiment of the present disclosure will be described.

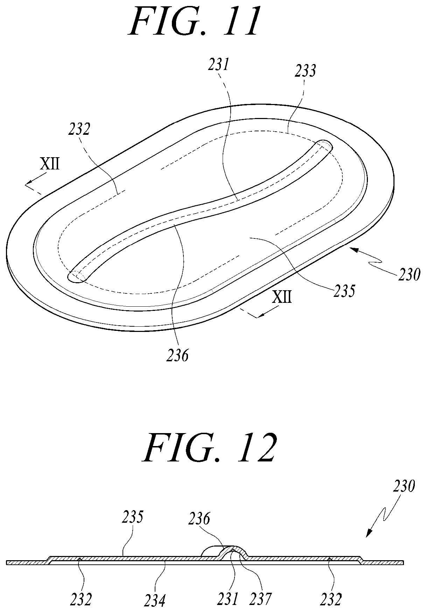

FIG. 11 is a perspective view illustrating a vent structure according to the fourth embodiment of the present disclosure. FIG. 12 is a sectional view taken along line XII-XII of FIG. 11.

In the following description, with reference to FIGS. 11 and 12, the secondary battery according to the fourth embodiment has the same structure as the secondary battery according to the first embodiment, except for a vent structure 230 (which may, e.g., be provided instead of or in addition to the vent structure 50, 210 and/or 220); therefore, a redundant description of the same configuration will be omitted.

The vent structure 230 may include two side notches 232 and 233 (as an example of outer predetermined breaking lines), and a connection notch 231 (as an example of a connection predetermined breaking line) that connects the side notches 232 and 233.

The vent structure 230 may include a base, e.g., a racetrack shaped base plate as illustrated in FIG. 11, in which the connection notch 211 and the side notches 212, 213 may be formed. The base may have a first side (e.g., the side facing upwards in the example of FIGS. 11 and 12) and a second side opposite to the first side (e.g., the side facing downwards in the example of FIGS. 11 and 12). The first side of the base may for example face outwards (e.g., toward an outside of the casing of the secondary battery) and the second side of the base may for example face inwards (toward an interior or inner side of the casing), or vice-versa.

The vent structure 230 may include a recess (which may also be referred to as first recess) 234 that encloses the side notches 232 and 233 and the connection notch 231 (e.g., similar to the recess 55 of the vent structure 50). The first recess 234 may for example be formed in the second side of the base of the vent structure 230.

The vent structure 230 may further include a second recess 237 that extends in a longitudinal direction of the connection notch 231. The second recess 237 may be embodied as a groove, e.g., as described above for the first groove 214, 224 of the vent structure 210 and/or 220, and may thus also form an example of a first groove of the vent structure according to the present disclosure.

The first recess 234 may be positioned in a lower surface of the vent structure 230 (e.g., a surface of the second side of the base of the vent structure 230). The side notches 232 and 233 may be positioned in the first recess 234 (e.g., formed in a bottom thereof). The first recess 234 may have a track-shaped cross-section in which two semicircles are connected by two straight lines.

The second recess 237 may be formed in a recessed manner from a bottom of the first recess 234. The connection notch 231 may be positioned in the second recess 237 (e.g., similar to the connection notch 221 in the first groove 224 of the vent structure 220). The second recess 237 may extend in a longitudinal direction of the connection notch 231 (e.g., along the connection notch 231). The second recess 237 may be formed to enclose the connection notch 231 (e.g., such that the entire connection notch 231 is formed within the second recess 237).

A first protrusion 235 may be formed on a surface opposite to the first recess 234 (e.g., the first side of the base of the vent structure 230). The first protrusion 235 may protrude from the vent structure 230 (e.g., the base). A second protrusion 236 (e.g., an elongate protrusion similar to the first elongate protrusion 215, 225 of the vent structure 210 and/or 220) may be formed on a surface opposite to the second recess 237 (e.g., the first side of the base of the vent structure 230). The second protrusion 236 may protrude from the first protrusion 235. The second protrusion 236 may be located on the first protrusion 235 (e.g., on a top thereof). The first protrusion 235 and the second protrusion 236 may be corresponding counterparts to the first recess 234 and the second recess 237, respectively (for example be formed by respective deformations of the base).

Apart from being formed in the first and second recesses 234, 237, the connection notch 231 and the sides notches 232, 233 may for example be embodied as described above for the vent structure 50, 210 and/or 220, e.g., with corresponding curved portions and/or linear portions.

In the case where the second recess 237 is formed in the bottom of the first recess 234 and the connection notch 231 is positioned in the second recess 237 as in the fourth embodiment, pressure may be concentrated on the connection notch 231, and the connection notch 231 may be easily fractured when needed.

Hereinafter, a secondary battery and a vent structure according to a fifth embodiment of the present disclosure will be described.

FIG. 13 is a plan view illustrating a vent structure according to the fifth embodiment of the present disclosure.

In the following description, with reference to FIG. 13, the secondary battery according to the fifth embodiment has the same structure as the secondary battery according to the first embodiment, except for a vent structure 240 (which may, e.g., be provided instead of or in addition to the vent structure 50, 210, 220 and/or 230); therefore, a redundant description of the same configuration will be omitted.

The vent structure 240 may include two side notches 242 and 243 (as an example of outer predetermined breaking lines), and a connection notch 241 (as an example of a connection predetermined breaking line) that connects the side notches 242 and 243. The connection notch 241 may include a first curved portion (which may also be referred to as first curved line) 241a and a second curved portion (which may also be referred to second curved line) 241b formed of curves (e.g., extending in curves). The first curved line 241a and the second curved line 241b may be formed in an arc shape. The first curved line 241a and the second curved line 241b may protrude convexly in different directions (e.g., within the plane of the vent structure 240 / perpendicular to the direction of view in Fig. 13), for example similar as described above for the vent structure 50. For example, a line that protrudes in a direction may be bowed out in the direction that the line protrudes to form a bulge of the line in the direction that the line protrudes.

The first curved line 241a may protrude convexly toward one side edge of the vent structure 240 (e.g., in a width direction of the vent structure 240 as illustrated in Fig. 13). The second curved line 241b may protrude convexly toward another side edge of the vent structure 240 (e.g., in a width direction of the vent structure 240 as illustrated in Fig. 13). The first curved line 241a and the second curved line 241b may have the same shape (e.g., same curvature) but may protrude convexly in opposite directions.

The first curved line 241a may be formed of a curve having a plurality of curvature radii. The first curved line 241a may include a first portion (first segment) 241aa having a first curvature radius R21, a second portion (second segment) 241ab connected to one longitudinal end of the first portion 241aa and having a second curvature radius R22, and a third portion (third segment) 241ac connected to a remaining longitudinal end of the first portion 241aa and having a third curvature radius R23.

The first curvature radius R21 may be greater than the second curvature radius R22. The first curvature radius R21 may for example be 1.1 times to 2.5 times the second curvature radius R22. The second curvature radius R22 and the third curvature radius R23 may be formed to be the same.

The second curved line 241b may be formed of a curve having a plurality of curvature radii. The second curved line 241b may include a first portion (first segment) 241ba, a second portion (second segment) 241bb connected to one longitudinal end of the first portion 241ba, and a third portion (third segment) 241bc connected to a remaining longitudinal end of the first portion 241ba.

A curvature radius of the first portion 241ba may be greater than (e.g., be 1.1 times to 2.5 times) a curvature radius of each of the second portion 241bb and the third portion 241bc. The curvature radii of the second portion 241bb and the third portion 241bc may be formed to be the same.

The two side notches 242 and 243 may protrude convexly in opposite directions (e.g., in a length direction of the vent structure as illustrated in Fig. 13). The two side notches 242 and 243 may each include a curved portion extending in an arc shape. The two side notches 242 and 243 may be spaced apart from each other by a distance (e.g., be separated by a gap). The two side notches 242 and 243 may be formed to partially enclose the connection notch 241. The curved portions of the side notches 242 and 243 may have a fourth curvature radius R24.

The fourth curvature radius R24 may be smaller than each of the first curvature radius R21 and the second curvature radius R22. The fourth curvature radius R24 may for example be 0.3 times to 0.7 times the second curvature radius R22.

Apart from the connection notch 241 being formed with multiple segments of different curvature, the connection notch 241 and the sides notches 242, 243 may for example be embodied as described above for the vent structure 50, 210, 220, 230 and/or 240. For example, the connection notch 241 and the sides notches 242, 243 may be arranged in a recess such as the recess 55 and/or 234 and/or on an elongate protrusion such as the elongate protrusions 215 and/or 216 or in a groove such as the grooves 224, 227 and/or 237.

In the case where the first curved line 241a and the second curved line 241b have multiple curvature radii as in the fifth embodiment, the degree of design freedom of the connection notch 241 may be further increased, and the connection notch 241 may be easily fractured at a preset pressure with improved accuracy.

Hereinafter, a secondary battery according to a sixth embodiment of the present disclosure will be described.

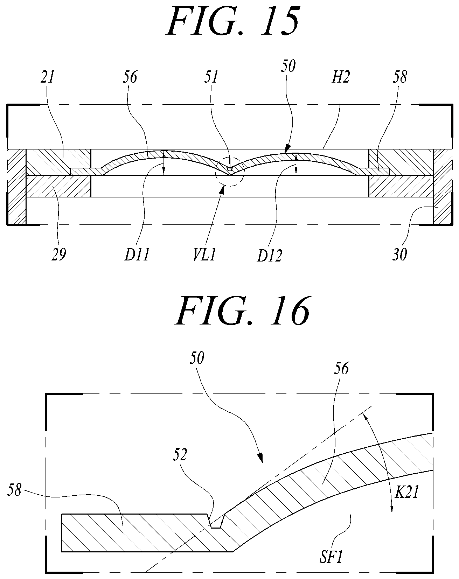

FIG. 14 is a perspective view illustrating the vent structure according to the sixth embodiment of the present disclosure. FIG. 15 is a sectional view of FIG. 14.

In the following description, with reference to FIGS. 14 and 15, the secondary battery according to the sixth embodiment has the same structure as the secondary battery according to the first embodiment (and/or second to fifth embodiment) described above, except for a vent structure 50; therefore, a redundant description of the same configuration will be omitted.

Referring to FIGS. 14 and 15, the vent structure 50 may include a first convex portion (also referred to as first bent portion) 56 and a second convex portion (also referred to as second bent portion) 57 that are formed between the connection notch 51 and the side notches 52 and 53. The first convex portion 56 may be located between one side edge of the connection notch 51 (e.g., on a first side of the connection notch 51) and the side notches 52 and 53. The second convex portion 57 may be located between a remaining side edge of the connection notch 51 (e.g., on a second side of the connection notch 51 opposite to the first side) and the side notches 52 and 53.

The first convex portion 56 and the second convex portion 57 may be spaced apart from each other with the connection notch 51 interposed therebetween. The first convex portion 56 and the second convex portion 57 may be arranged adjacent to each other (e.g., with only the connection notch 51 therebetween). For example, the first convex portion 56 may be disposed on a left side of the connection notch 51, and the second convex portion 57 may be disposed on a right side of the connection notch 51.

A support plate 58 (e.g., as an example or part of a base of the vent structure 50), which is formed of a flat plate (e.g., an oval or track-shaped plate), may be formed outside (e.g., around or enclosing) the first convex portion 56 and the second convex portion 57. The support plate 58 may for example be inserted between the cap plate 21 and the upper insulator 29.

The first convex portion 56 and the second convex portion 57 may extend from a region where the connection notch 51 and the first side notch 52 are connected to a region where the connection notch 51 and the second side notch 53 are connected (e.g., along the entire length of the connection notch 51). A concave portion may be formed on an opposite surface of each of the first convex portion 56 and the second convex portion 57.

A height of the first convex portion 56 may be formed to be different from a height of the second convex portion 57. The height of the first convex portion 56 may be greater than the height of the second convex portion 57.

Accordingly, a first distance D11 between an upper end of the first convex portion 56 and an inner end of the vent structure 50 may be greater than a second distance D12 between an upper end of the second convex portion 57 and the inner end of the vent structure 50 (e.g., formed by the (e.g., inner) side of the vent structure 50 or base thereof that is opposite to the direction in which the first and second convex portions protrude). The first distance D11 may range from 1.02 times to 2.5 times the second distance D12. When the heights of the first convex portion 56 and the second convex portion 57 differ from each other, the notches may be more easily fractured due to an imbalance of force.

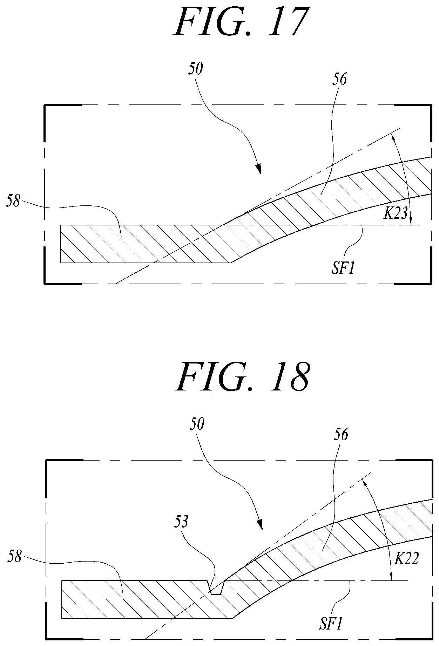

FIG. 16 is a sectional view taken along line A3-A3 of FIG. 14. FIG. 17 is a sectional view taken along line A4-A4 of FIG. 14 (wherein the sectional view of FIG. 15 may for example also be taken in the same plane, i.e., along an extension of line A4-A4). FIG. 18 is a sectional view taken along line A5-A5 of FIG. 14.

Referring to FIG. 14 and FIGS. 16 to 18, the connection notch 51 may include an inflection point CP1 at which the first curved line 51a and the second curved line 51b meet, a first reference point CP2 (e.g., an outermost point of the first curved line 51a) at which the first curved line 51a forms a maximum distance from the reference line SL1 extending in a longitudinal direction of the vent structure 50 at a center in a width direction of the vent structure 50, and a second reference point CP3 (e.g., an outermost point of the second curved line 51b) at which the second curved line 51b forms a maximum distance from the reference line SL1.

In addition, a first inclination angle K21 (as an example of a second bending angle) formed between a tangent line at an outer edge of the first convex portion 56 of the vent structure 50 in the width direction at the first reference point CP2 and a (virtual) reference plane SF1 parallel to the cap plate 21, and a second inclination angle K22 (as another example of a second bending angle) formed between a tangent line at an outer edge of the first convex portion 56 in the width direction at the second reference point CP3 and the reference plane SF1, may each be greater than a third inclination angle K23 (as an example of a third bending angle) formed between a tangent line at an outer edge of the first convex portion 56 in the width direction at the inflection point CP1 and the reference plane SF1.

Here, the phrase "outer edge of the first convex portion 56 in the width direction at the first reference point CP2, the second reference point CP3, or the inflection point CP1" refers to an outer edge of the first convex portion 56 that intersects with a line extending in the width direction of the first convex portion 56 at the first reference point CP2, the second reference point CP3, or the inflection point CP1.

Furthermore, the first inclination angle K21 and the second inclination angle K22 may each range from 1.2 times to 2.5 times the third inclination angle K23.

For example, the first inclination angle K21 and the second inclination angle K22 may each range from 6 degrees to 25 degrees, and the third inclination angle K23 may range from 5 degrees to 15 degrees.

In the case where the first inclination angle K21 and the second inclination angle K22 are each greater than the third inclination angle K23, upon swelling of a central portion of the vent structure 50, uniform deformation of the central portion and side portions of the vent structure 50 may be induced, thereby facilitating fracture of the notches. In particular, when the first inclination angle K21 and the second inclination angle K22 each range from 1.2 times to 2.5 times the third inclination angle K23, an opening pressure of the vent structure 50 may be more precisely controlled.

According to the present embodiment, the first convex portion 56 and the second convex portion 57 are formed, and since the heights of the first convex portion 56 and the second convex portion 57 are different from each other, the notches may be easily and reliably fractured at a preset pressure.

In the case where the connection notch 51 extends along a curve similar to an S-shape, an area subjected to pressure may increase compared to that of a straight line, so that the connection notch 51 can be accurately and easily fractured at a preset fracture pressure. In addition, when fractured, the connection notch 51 can be easily and rapidly fractured along the curve.

The curved portions 52a and 53a of the side notches 52 and 53 may be fractured, while the first linear portions 52b and 53b and the second linear portions 52c and 53c may be folded rather than being fractured. Because the first linear portions 52b and 53b and the second linear portions 52c and 53c are present, the vent pieces may be easily bent to rapidly secure a discharge space. In addition, depending on an environment where the fracture occurs, the first linear portions 52b and 53b and the second linear portions 52c and 53c may be partially or fully fractured.

In some cases, the connection notch 51 may not be fractured, and the side notches 52 and 53 may be fractured first. In this case, the curved portion 52a, the first linear portions 52b and 53b, and the second linear portions 52c and 53c may all be fractured, thereby forming two openings on opposite sides, and securing sufficient space for gas discharge.

Hereinafter, a secondary battery according to a seventh embodiment of the present disclosure will be described.

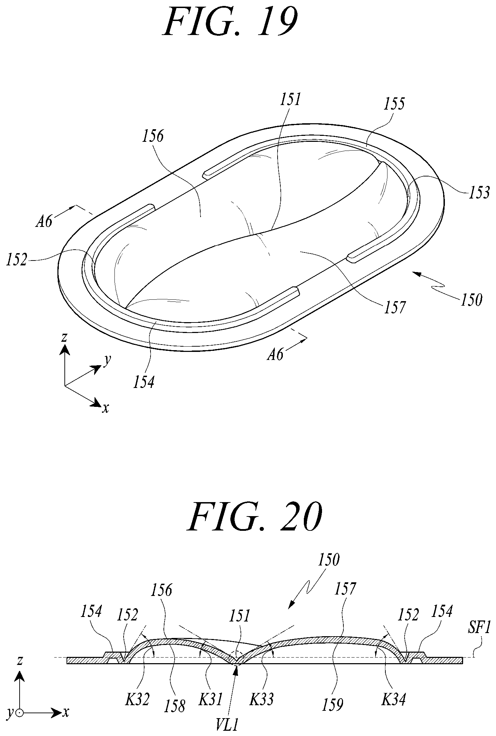

FIG. 19 is a perspective view illustrating a vent structure according to the seventh embodiment of the present disclosure. FIG. 20 is a sectional view taken along line A6-A6 of FIG. 19.

In the following description, with reference to FIGS. 19 and 20, the secondary battery according to the seventh embodiment has the same structure as the secondary battery according to the sixth embodiment (and/or the first to fifth embodiments) described above, except for a vent structure 150; therefore, a redundant description of the same configuration will be omitted.

The vent structure 150 may include two side notches 152 and 153, and a connection notch 151 that connects the side notches 152 and 153. The side notches 152 and 153 and the connection notch 151 may be formed on an outer surface of the vent structure 150 that faces an outer side of the casing.

The connection notch 151 and the side notches 152 and 153 according to the seventh embodiment may have the same structure as the connection notch and the side notches of the sixth embodiment (and/or the first to fifth embodiments) described above.

In addition, the vent structure 150 may further include a first support rib 154, which may be located outside the first side notch 152 (e.g., as seen from the connection notch 151). The first support rib 154 may enclose the first side notch 152. The vent structure 150 may further include a second support rib 155, which may be located outside the second side notch 153 and, e.g., enclose the second side notch 153.

The first support rib 154 may be disposed farther from a center of the vent structure 150 than the first side notch 152. The first support rib 154 may be connected to an upper end of the first side notch 152. However, the present disclosure is not limited thereto, and the first support rib 154 may be spaced apart from the first side notch 152.

The first support rib 154 may serve to prevent deformation of the vent structure 150 and/or to support the vent structure 150 so that the first side notch 152 may be easily torn when the first side notch 152 fractures.

Furthermore, the second support rib 155 may be disposed farther from the center of the vent structure 150 than the second side notch 153. and the second support rib 155 may be connected to an upper end of the second side notch 153. However, the present disclosure is not limited thereto.

The second support rib 155 may serve to prevent deformation of the vent structure 150 and to support the vent structure 150 so that the second side notch 153 may be easily torn when the second side notch 153 fractures.

Furthermore, the vent structure 150 may include a first convex portion (first bent portion) 156 and a second convex portion (second bent portion) 157 that are formed between the connection notch 151 and the side notches 152 and 153. The first convex portion 156 may be located between one side edge of the connection notch 151 and the side notches 152 and 153. The second convex portion 157 may be located between a remaining side edge of the connection notch 151 and the side notches 152 and 153. For example, the first convex portion 156 may be disposed on a left side of the connection notch 151, and the second convex portion 157 may be disposed on a right side of the connection notch 151.

The first convex portion 156 and the second convex portion 157 may extend from a region where the connection notch 151 and the first side notch 152 are connected to a region where the connection notch 151 and the second side notch 153 are connected. A first concave portion 158 may be formed on an opposite surface of the first convex portion 156. A second concave portion 159 may be formed on an opposite surface of the second convex portion 157.

The connection notch 151 may be located at a valley portion VL1 formed between the first convex portion 156 and the second convex portion 157. The first side notch 152 may be located between the first convex portion 156 and the first support rib 154, and between the second convex portion 157 and the first support rib 154. The second side notch 153 may be located between the first convex portion 156 and the second support rib 155, and between the second convex portion 157 and the second support rib 155.

A first tangential angle K31 (as an example of a first bending angle), which is formed between a tangent line at an edge of the first convex portion 156 adjacent to the connection notch 151 and the virtual reference plane SF1 parallel to the cap plate 21, may be smaller than a second tangential angle K32 (as an example of a second bending angle), which is formed between a tangent line at an edge of the first convex portion 156 adjacent to the first side notch 152 or the second side notch 153 and the reference plane SF1.

The first tangential angle K31 may range from 1 degree to 20 degrees, and/or the second tangential angle K32 may range from 2 degrees to 30 degrees. In addition, the first tangential angle K31 may range from 2 degrees to 15 degrees, and/or the second tangential angle K32 may range from 2 degrees to 25 degrees.

The second tangential angle K32 may range from 1.1 times to 3.5 times the first tangential angle K31. Furthermore, a difference between the first tangential angle K31 and the second tangential angle K32 may range from 1 degree to 10 degrees.

A third tangential angle K33 (as another example of a first bending angle), which is formed between a tangent line at an edge of the second convex portion 157 adjacent to the connection notch 151 and the virtual reference plane SF1 parallel to the cap plate 21, may be smaller than a fourth tangential angle K34 (as another example of a second bending angle), which is formed between a tangent line at an edge of the second convex portion 157 adjacent to the first side notch 152 or the second side notch 153 and the reference plane SF1.

The fourth tangential angle K34 may range from 1.1 times to 3.5 times the third tangential angle K33. A difference between the third tangential angle K33 and the fourth tangential angle K34 may range from 1 degree to 10 degrees.

The third tangential angle K33 may range from 1 degree to 20 degrees, and the fourth tangential angle K34 may range from 2 degrees to 30 degrees. In addition, the third tangential angle K33 may range from 2 degrees to 15 degrees, and the fourth tangential angle K34 may range from 2 degrees to 25 degrees.

As described above, according to the seventh embodiment, the first support rib 154 and the second support rib 155 are formed, thereby preventing deformation of the vent structure 150 and enabling the side notches 152 and 153 to be easily torn.

Furthermore, because a tangential angle at a portion of each of the first convex portion 156 and the second convex portion 157 that is connected to the connection notch 151 is smaller than a tangential angle at a portion of each of the first convex portion 156 and the second convex portion 157 that is connected to the side notches 152 and 153, the connection notch 151 that is positioned in a central portion may not only be easily deformed upward by pressure, but the connection notch 151 and the side notches 152 and 153 may also be easily fractured.

Hereinafter, a secondary battery according to a eighth embodiment of the present disclosure will be described.

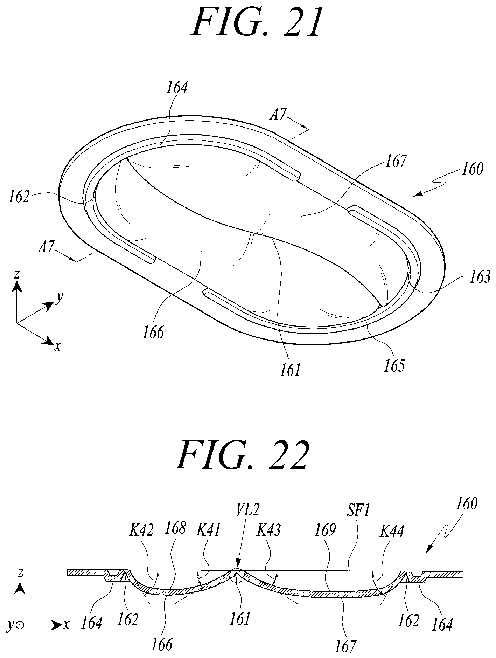

FIG. 21 is a bottom perspective view illustrating a vent structure according to a eighth embodiment of the present disclosure. FIG. 22 is a sectional view taken along line A7-A7 of FIG. 21.

Referring to FIGS. 21 and 22, the secondary battery according to the eighth embodiment has the same structure as the secondary battery according to the sixth embodiment (and/or the first to fifth embodiment) described above, except for a vent structure 160; therefore, a redundant description of the same configuration will be omitted.

The vent structure 160 may include two side notches 162 and 163, and a connection notch 161 that connects the side notches 162 and 163. The side notches 162 and 163 and the connection notch 161 may be formed on an inner surface of the vent structure 160 that faces an inner side of the casing. The connection notch 161 and the side notches 162 and 163 according to the eighth embodiment may have the same structure as the connection notch and the side notches of the sixth embodiment (and/or the first to fifth embodiments) described above.

The vent structure 160 may further include a first support rib 164, which may be located outside the first side notch 162. The first support rib 164 may enclose the first side notch 162. The vent structure 160 may further include a second support rib 165, which may be located outside the second side notch 163 and may, e.g., enclose the second side notch 163. The first support rib 164 and the second support rib 165 may protrude toward the inner side of the casing.

The first support rib 164 may be disposed farther from a center of the vent structure 160 than the first side notch 162. The second support rib 165 may be disposed farther from the center of the vent structure 160 than the second side notch 163.

Furthermore, the vent structure 160 may include a first convex portion 166 and a second convex portion 167 that are formed between the connection notch 161 and the side notches 162 and 163. The first convex portion 166 and the second convex portion 167 may protrude toward the inner side of the casing.

The first convex portion 166 and the second convex portion 167 may be positioned with the connection notch 161 interposed therebetween. A first concave portion 168 may be formed on an opposite surface of the first convex portion 166. A second concave portion 169 may be formed on an opposite surface of the second convex portion 167.

The connection notch 161 may be located at a valley portion VL2 formed between the first convex portion 166 and the second convex portion 167. The first side notch 162 may be located between the first convex portion 166 and the first support rib 164, and between the second convex portion 167 and the first support rib 164. The second side notch 163 may be located between the first convex portion 166 and the second support rib 165, and between the second convex portion 167 and the second support rib 165.

A first tangential angle K41 (as an example of a first bending angle), which is formed between a tangent line at an edge of the first concave portion 168 adjacent to the connection notch 161 and the virtual reference plane SF1 parallel to the cap plate 21, may be smaller than a second tangential angle K42 (as an example of a second bending angle), which is formed between a tangent line at an edge of the first concave portion 168 adjacent to the first side notch 162 and the reference plane SF1.

The first tangential angle K41 may range from 1 degree to 20 degrees, and the second tangential angle K42 may range from 2 degrees to 30 degrees. In addition, the first tangential angle K41 may range from 2 degrees to 15 degrees, and the second tangential angle K42 may range from 2 degrees to 25 degrees. A difference between the first tangential angle K41 and the second tangential angle K42 may range from 1 degree to 10 degrees.

A third tangential angle K43 (as another example of a first bending angle), which is formed between a tangent line at an edge of the second concave portion 169 adjacent to the connection notch 161 and the virtual reference plane SF1 parallel to the cap plate 21, may be smaller than a fourth tangential angle K44 (as another example of a second bending angle), which is formed between a tangent line at an edge of the second concave portion 169 adjacent to the first side notch 162 and the reference plane SF1.

The third tangential angle K43 may range from 1 degree to 20 degrees, and the fourth tangential angle K44 may range from 2 degrees to 30 degrees. In addition, the third tangential angle K43 may range from 2 degrees to 15 degrees, and the fourth tangential angle K44 may range from 2 degrees to 25 degrees. A difference between the third tangential angle K43 and the fourth tangential angle K44 may range from 1 degree to 10 degrees.

As described above, according to the third embodiment, the side notches 162 and 163 and the connection notch 161 are formed on the inner surface of the vent structure 160 that faces the inner side of the casing, and the first convex portion 166 and the second convex portion 167 protrude toward the inner side of the casing. Therefore, the side notches 162 and 163, the connection notch 161, the first convex portion 166, and the second convex portion 167 may be prevented from being damaged by external impact or pressure during a transportation process or the like.

Furthermore, a tangential angle at a portion of each of the first concave portion 168 and the second concave portion 169 that is connected to the connection notch 161 is smaller than a tangential angle at a portion of each of the first concave portion 168 and the second concave portion 169 that is connected to the side notches 162 and 163. Accordingly, the connection notch 161 and the side notches 162 and 163 may be easily fractured.

Hereinafter, a secondary battery according to a ninth embodiment of the present disclosure will be described.

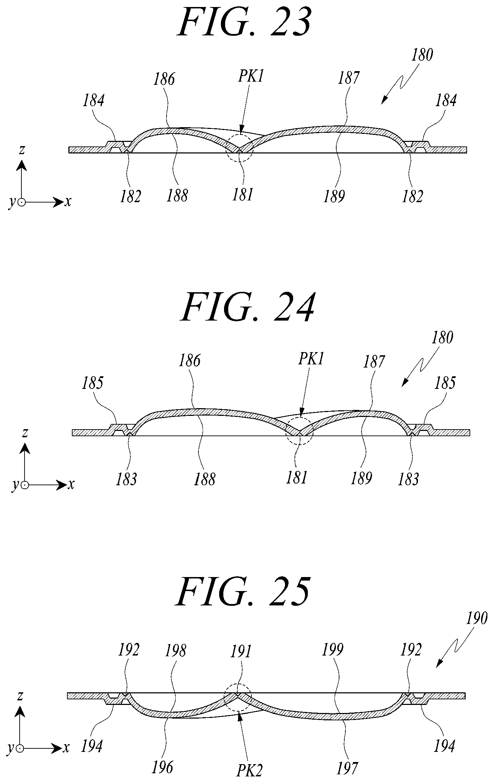

FIG. 23 is a sectional view illustrating a portion of a vent structure in which a connection notch and a first side notch are located, according to the ninth embodiment of the present disclosure. FIG. 24 is a sectional view illustrating a portion of the vent structure in which the connection notch and a second side notch are located, according to the ninth embodiment of the present disclosure.

In the following description, with reference to FIGS. 23 and 24, the secondary battery according to the ninth embodiment has the same structure as the secondary battery according to the sixth embodiment (and/or the first to fifth embodiments) described above, except for a vent structure 180; therefore, a redundant description of the same configuration will be omitted.

The vent structure 180 may include two side notches 182 and 183, and a connection notch 181 that connects the side notches 182 and 183. The side notches 182 and 183 and the connection notch 181 may be formed on an inner surface of the vent structure 180 that faces the inner side of the casing. The connection notch 181 and the side notches 182 and 183 according to the ninth embodiment may have the same structure as the connection notch and the side notches of the sixth embodiment (and/or the first to fifth embodiments) described above.

In addition, the vent structure 180 may further include a first support rib 184, which may be located outside the first side notch 182 and may enclose the first side notch 182. The vent structure 180 may further include a second support rib 185, which may be located outside the second side notch 183 and may enclose the second support rib 183. The first support rib 184 and the second support rib 185 may protrude in a direction facing the outer side of the casing.

The first support rib 184 may be disposed farther from a center of the vent structure 180 than the first side notch 182. The second support rib 185 may be disposed farther from the center of the vent structure 180 than the second side notch 183.

Furthermore, the vent structure 180 may include a first convex portion 186 and a second convex portion 187 that are formed between the connection notch 181 and the side notches 182 and 183. The first convex portion 186 and the second convex portion 187 may protrude toward the outer side of the casing. A first concave portion 188 may be formed on an opposite surface of the first convex portion 186, and a second concave portion 189 may be formed on an opposite surface of the second convex portion 187.

The connection notch 181 may be located at a peak portion PK1 formed between the first concave portion 188 and the second concave portion 189. The first side notch 182 may be located between the first concave portion 188 and the first support rib 184, and between the second concave portion 189 and the first support rib 184. The second side notch 183 may be located between the first concave portion 188 and the second support rib 185, and between the second concave portion 189 and the second support rib 185.

Hereinafter, a secondary battery according to a tenth embodiment of the present disclosure will be described.

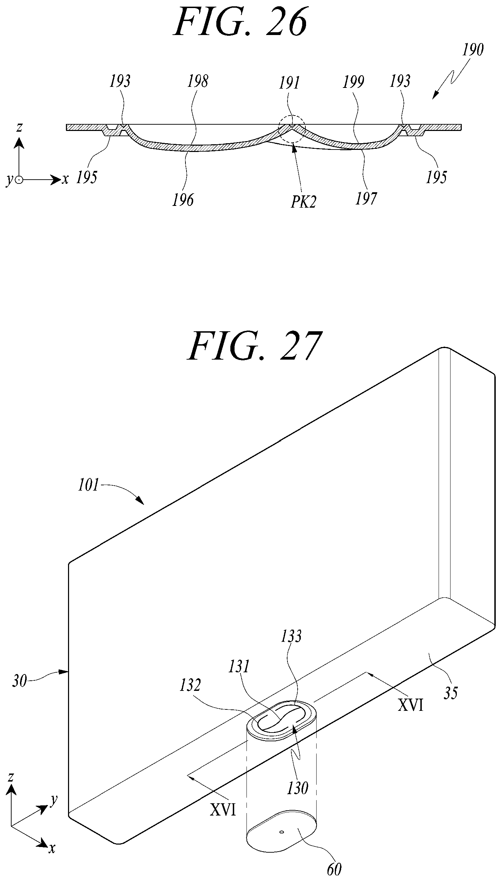

FIG. 25 is a sectional view illustrating a portion of a vent structure in which a connection notch and a first side notch are located, according to the tenth embodiment of the present disclosure. FIG. 26 is a sectional view illustrating a portion of the vent structure in which the connection notch and a second side notch are located, according to the tenth embodiment of the present disclosure.

In the following description, with reference to FIGS. 25 and 26, the secondary battery according to the tenth embodiment has the same structure as the secondary battery according to the sixth embodiment (and/or the first to fifth embodiments) described above, except for a vent structure 190; therefore, a redundant description of the same configuration will be omitted.

The vent structure 190 may include two side notches 192 and 193, and a connection notch 191 that connects the side notches 192 and 193. The side notches 192 and 193 and the connection notch 191 may be formed on an outer surface of the vent structure 190 that faces the outer side of the casing. The connection notch 191 and the side notches 192 and 193 according to the fifth embodiment may have the same structure as the connection notch and the side notches of the first embodiment described above.

The vent structure 190 may further include a first support rib 194 that may be located outside the first side notch 192 and may enclose the first side notch 192. The vent structure 190 may further include a second support rib 195 that may be located outside the second side notch 193 and may enclose the second side notch 193. The first support rib 194 and the second support rib 195 may protrude toward the inner side of the casing.

The first support rib 194 may be located farther from a center of the vent structure 190 than the first side notch 192, and the second support rib 195 may be located farther from the center of the vent structure 190 than the second side notch 193.

The vent structure 190 may further include a first convex portion 196 and a second convex portion 197 formed between the connection notch 191 and the side notches 192 and 193. The first convex portion 196 and the second convex portion 197 may protrude toward the inner side of the casing.

A first concave portion 198 may be formed on an opposite surface of the first convex portion 196, and a second concave portion 199 may be formed on an opposite surface of the second convex portion 197. The connection notch 191 may be located at a peak portion PK2 formed between the first concave portion 198 and the second concave portion 199. The first side notch 192 may be located between the first concave portion 198 and the first support rib 194, and between the second concave portion 199 and the first support rib 194. The second side notch 193 may be located between the first concave portion 198 and the second support rib 195, and between the second concave portion 199 and the second support rib 195.

According to an embodiment of the present disclosure, a first convex portion and a second convex portion are formed in a vent structure, and a connection notch extending in a curved line is formed between the first convex portion and the second convex portion. Accordingly, stress may be concentrated on the first convex portion and the second convex portion each having a dome shape, so that the vent structure may easily open at a preset pressure. Furthermore, because the first convex portion and the second convex portion have different heights, the notch may be easily and reliably fractured at the preset pressure even in various environments in which pressure increases.

Furthermore, in the case where a connection notch includes curved lines that protrude convexly in different directions, an area subjected to pressure may increase compared to that of a straight line, so that the connection notch may be fractured accurately and easily at a predetermined fracture pressure. In addition, because the area subjected to pressure increases, overall rigidity of the vent structure may be designed to be high, and accordingly, the vent structure may be designed to open widely by a large force when the connection notch fractures.

Hereinafter, a secondary battery and a vent structure according to an eleventh embodiment of the present disclosure will be described.

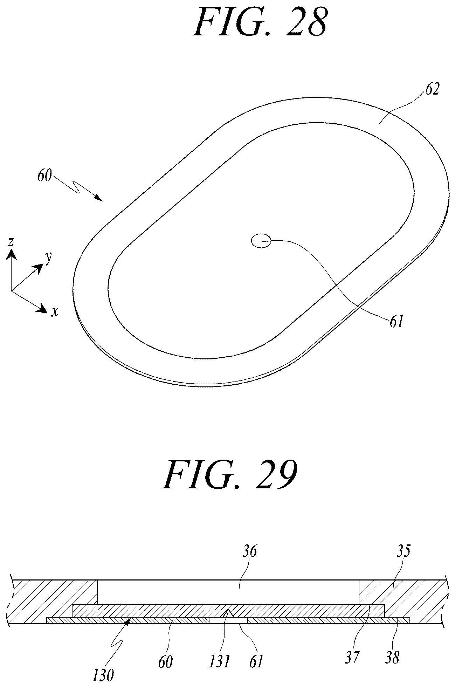

FIG. 27 is a perspective view illustrating the secondary battery according to the eleventh embodiment of the present disclosure. FIG. 28 is a diagram illustrating a vent protection film according to the eleventh embodiment of the present disclosure. FIG. 29 is a sectional view taken along line XVI-XVI of FIG. 27.

In the following description, with reference to FIGS. 27 to 29, the secondary battery 101 according to the eleventh embodiment has the same structure as the secondary battery according to the first embodiment, except for a vent structure 130 (which may, e.g., be provided instead of or in addition to the vent structure 50, 210, 220 230 and/or 240); therefore, a redundant description of the same configuration will be omitted.

The secondary battery 101 may be configured as a prismatic battery having a casing 30 with a substantially rectangular pillar shape (e.g., the shape of a rectangular cuboid). The vent structure 130 may be fixed to a bottom 35 of the casing 30. The bottom 35 of the casing 30 may be integrally formed with the casing 30, or may be fixed to the casing 30 by welding or the like.

An exhaust hole 36 (as an example of a vent hole) for discharging gas may be formed in the bottom 35 of the casing 30. A first stepped portion 37, into which the vent structure 130 is inserted, may be formed around a lower end of the exhaust hole 36 (e.g., formed by a first step-shaped recess or cutout extending along a circumference (e.g., a rim or edge) of the exhaust hole 36). A second stepped portion 38, into which a vent protection film 60 is inserted, may be formed around a lower end of the first stepped portion 37 (e.g., formed by a second step-shaped recess or cutout extending along a circumference (e.g., a rim or edge) of the first step-shaped recess or cutout).

The vent structure 130 may be formed in a plate shape (e.g., include a base in a plate shape, for example a racetrack-shaped base plate as illustrated in Fig. 28). The vent structure 130 may be fixed to the casing 30, e.g., by welding. The vent structure 130 may include two side notches 132 and 133 (as an example of outer predetermined breaking lines), and a connection notch 131 (as an example of a connection predetermined breaking line) that connects the side notches 132 and 133. The connection notch 131 and the side notches 132 and 133 may have the same structures as those described in the first embodiment (and/or the second to tenth embodiments); therefore, a redundant description thereof will be omitted.

The vent protection film 60 may be provided at (e.g., under) the vent structure 50. The vent protection film 60 may be formed of a film having flexibility. A connection hole 61 for pressure release may be formed in the vent protection film 60. Furthermore, an attachment region 62 for attachment of the vent protection film 60 may be formed on a perimeter of the vent protection film 60. The attachment region 62 may adhere or fuse to the vent structure 50 and/or the cap plate 21 or the bottom 35 of the casing 30.

A similar vent protection film may optionally also be provided in any one of the first to tenth embodiments (and any one of the twelfth to fourteenth embodiments). In such examples, the cap plate 21 (or the side of the casing that the vent structure is formed in) may be provided with a vent hole as described above (e.g., having one or both of a first stepped portion 37 for placing the vent structure therein and a second stepped portion for placing the vent protection film therein).

As described above, according to the eleventh embodiment, the vent structure 130 is provided in the bottom 35 of the casing 30, so that an electrolyte may also be discharged together when the vent structure 130 opens.

Hereinafter, a secondary battery and a vent structure according to a twelfth embodiment of the present disclosure will be described.

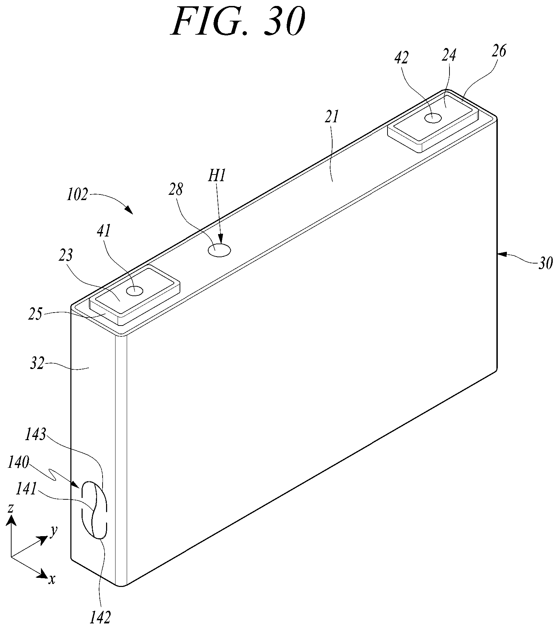

FIG. 30 is a perspective view illustrating the secondary battery according to the twelfth embodiment of the present disclosure.

In the following description, with reference to FIG. 30, the secondary battery 102 according to the twelfth embodiment has the same structure as the secondary battery according to the first embodiment (and/or the second to eleventh embodiments), except for a vent structure 140 (which may, e.g., be provided instead of or in addition to the vent structure 50, 140, 210, 220 230 and/or 240); therefore, a redundant description of the same configuration will be omitted.

The secondary battery 102 may be configured as a prismatic battery having a casing 30 with a substantially rectangular pillar shape. The vent structure 140 may be provided in a side surface 32 of the casing 30 (e.g., instead of or in addition to a vent structure in one of both of the bottom of the casing 30 and the cap plate 21). The vent structure 140 may be formed (e.g., in a groove shape) in any one of four side surfaces 32 of the casing 30 (for example by forming the connection and side notches 141, 142, 143 in the respective side surface 32). For example, the vent structure 140 integrated with the casing 30 may be formed in the side surface 32 of the casing 30 by directly forming a groove (or grooves) in an outer surface of the casing 30.

The vent structure 140 may include two side notches 142 and 143 (as an example of outer predetermined breaking lines), and a connection notch 141 (as an example of a connection predetermined breaking line) that connects the side notches 142 and 143. Since the connection notch 141 and the side notches 142 and 143 have the same structure as the connection notch and the side notches according to the first embodiment (and/or the second to eleventh embodiments) described above, a redundant description thereof will be omitted.

As described above, according to the present embodiment, the vent structure 140 is formed on the side surface 32 of the casing 30, so that an electrolyte can also be discharged together when the vent structure 140 opens.

Hereinafter, a secondary battery and a vent structure according to a thirteenth embodiment of the present disclosure will be described.

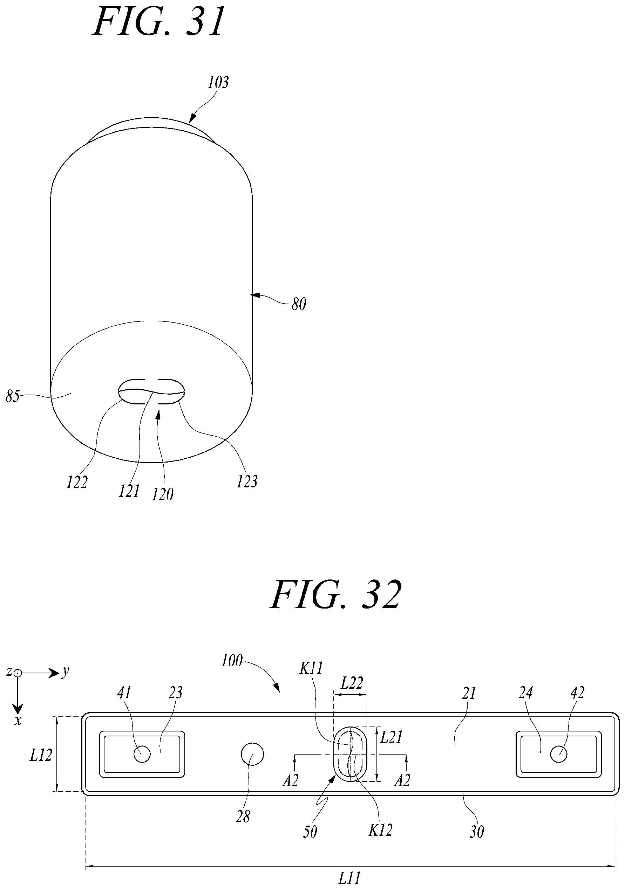

FIG. 31 is a perspective view illustrating the secondary battery according to the thirteenth embodiment of the present disclosure.

Referring to FIG. 31, a secondary battery 103 according to the thirteenth embodiment may be configured as a cylindrical battery having a casing 80 with a substantially cylindrical shape. A vent structure 120 may be formed in a bottom 85 of the casing 80. The bottom 85 of the casing 80 may be integrally formed with the casing 80, or may be fixed to the casing 80 by welding or the like.

The secondary battery 103 according to the thirteenth embodiment may be implemented as a cylindrical battery having any of various well-known structures and is not limited to a specific cylindrical battery structure.

The vent structure 120 may be formed in the bottom 85 of the casing 80, and may for example be integrally formed with the casing 80 by directly forming a groove in the bottom 85 of the casing 80. However, the present disclosure is not limited thereto, and the vent structure 120 may be formed in a plate shape and be fixed to the bottom 85 of the casing 80, e.g., by welding. In other examples, the vent structure 120 may be provided in a cap of the secondary battery 103 or a side surface of the secondary battery instead of or in addition to the vent structure 120 at the bottom 85 of the casing 80.

The vent structure 120 may include two side notches 122 and 123 (as an example of outer predetermined breaking lines), and a connection notch 121 that connects the side notches 122 and 123 (as an example of a connection predetermined breaking line). Since the connection notch 121 and the side notches 122 and 123 have the same structures as the connection notch and the side notches described in the first embodiment (and/or the second to twelfth embodiment), a redundant description thereof will be omitted.

Hereinafter, a secondary battery according and a vent structure to a fourteenth embodiment of the present disclosure will be described.

FIG. 32 is a top plan view illustrating the secondary battery according to the fourteenth embodiment of the present disclosure.

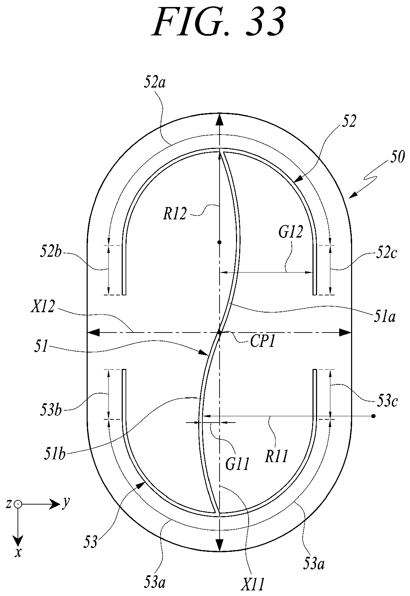

In the following description, with reference to FIG. 32, the secondary battery 104 according to the fourteenth embodiment has the same structure as the secondary battery according to the first embodiment (and/or the second to thirteenth embodiments), except for orientation of a vent structure 50; therefore, a redundant description of the same configuration will be omitted. In other examples, a vent structure 50 as described below (and, e.g., illustrated in FIG. 33) may be used in another orientation, for example as in the first embodiment (and/or the second to thirteenth embodiments), e.g., with a longitudinal direction of the vent structure 50 parallel to a longitudinal direction of the cap plate 21. Put differently, any of the vent structures of the first to thirteenth embodiments may also be embodied as described below (and, e.g., illustrated in FIG. 33).

The vent structure 50 may extend a predetermined length in the width direction of the cap plate 21 (x-axis direction). The vent structure 50 may have a major axis direction corresponding to a longitudinal direction of the vent structure 50 and a minor axis direction corresponding to a width direction of the vent structure 50. The major axis direction of the vent structure 50 may correspond to a direction intersecting (e.g., at an angle to) the longitudinal direction (y-axis direction) of the cap plate 21. Particularly, the major axis direction may be formed perpendicular to the longitudinal direction of the cap plate 21 (y-axis direction). The minor axis direction may be formed parallel to the longitudinal direction of the cap plate 21 (y-axis direction).

In the example of FIG. 33, the vent structure 50 has a major axis (long axis) X11 and a minor axis (short axis) X12. The major axis X11 may refer to a longest line segment that passes through a center of the vent structure 50 and connects outer edges (e.g., centers thereof) of the vent structure 50. The major axis X11 may be (or correspond to) a direction of largest extent or physical dimension of the vent structure and/or may follow the longest side of the vent structure 50, for example parallel to a longest edge and/or longest symmetry axis of the vent structure (without the predetermined breaking lines). The major axis X11 may extend in a direction intersecting (or parallel to) a longitudinal direction of the cap plate 21. In addition, the major axis X11 may extend in a direction perpendicular to the longitudinal direction of the cap plate 21, that is, in a width direction of the cap plate 21. However, the present disclosure is not limited thereto, and the major axis X11 may be obliquely oriented with respect to the longitudinal direction of the cap plate 21.

The minor axis X12 may refer to a shortest line segment that passes through a center of the vent structure 50 and connects outer edges (e.g., centers thereof) of the vent structure 50. The minor axis X12 may be (or correspond to) a direction of smallest extent or physical dimension of the vent structure (in a plane perpendicular to the thickness direction) and/or may follow the shortest side of the vent structure 50, for example parallel to a shortest edge and/or shortest symmetry axis of the vent structure (without the predetermined breaking lines).

In the example of FIG. 33, the minor axis X12 may refer to a longest line segment that connects outer edges of the vent structure 50 and extends in the longitudinal direction of the cap plate 21. The minor axis X12 may pass through the center of the vent structure 50 and connect the outer edges of the vent structure 50, and may be perpendicular to the major axis X11.

The major axis X11 may be formed longer than the minor axis X12. The major axis X11 may have a length that ranges from 1.2 times to 3.5 times that of the minor axis X12.

The major axis X11 may extend in the longitudinal direction of the vent structure 50 and in the width direction of the cap plate 21. The minor axis X12 may extend in the width direction of the vent structure 50 and in the longitudinal direction of the cap plate 21.

In the present description, the length of the major axis X11 may refer to a length of the vent structure 50 that is exposed to the outside through the vent hole H2. The major axis X11 may intersect the longitudinal direction of the cap plate 21. In addition, the major axis X11 may be formed perpendicular to the longitudinal direction of the cap plate 21.

When a length of the cap plate 21 is defined as L11, a width of the cap plate 21 is defined as L12, a length of the major axis X11, which is the longest line segment that is in the vent structure and extends in the width direction of the cap plate 21, is defined as L21, and a length of the minor axis X12, which is the longest line segment that is in the vent structure and extends in the longitudinal direction of the cap plate 21, is defined as L22, the following equation may be satisfied: (the length L22 of the minor axis X12) / (the length L11 of the cap plate 21) = AL * (the length L21 of the major axis X11) / (the width L12 of the cap plate 21). Here, AL may be a constant satisfying $0.08 \leq AL \leq 0.36$.

When a ratio of the length L22 of the minor axis X12 to the length L11 of the cap plate 21 is equal to AL * (the length L21 of the major axis X11) / (the width L12 of the cap plate 21), not only may a fracture pressure of the vent structure 50 be precisely set, but scattering materials such as gas may also be rapidly discharged when the vent structure 50 opens. In addition, a sufficiently large space below the vent structure 50 may be secured, thereby increasing a distance between the electrode tabs.

The electrode assembly 10 has a structure in which the separator 13 is stacked between the positive electrode 11 and the negative electrode 12 each having a plate shape. The positive electrode 11 having a plate shape includes two positive electrode tabs 15, and the negative electrode 12 having a plate shape includes two negative electrode tabs 16.

The positive electrode tabs 15 may be spaced apart from each other in the longitudinal direction of the cap plate 21. The negative electrode tabs 16 may also be spaced apart from each other in the longitudinal direction of the cap plate 21. A distance L31 between the positive electrode tabs 15 may be greater than the maximum width (corresponding to the length L22) of the vent structure 50.

More specifically, when a distance between the positive electrode tabs 15 located on each positive electrode 11 having a plate shape is defined as L31, the distance L31 between the positive electrode tabs 15 may satisfy the following equation: $L31 = BL \times L22$, where L22 denotes the length of the minor axis of the vent structure 50, and BL may be a constant satisfying $1.2 \leq BL \leq 6.5$.

When the distance L31 between the positive electrode tabs 15 is equal to BL * (the length L22 of the minor axis), heat generated between the tabs, on which current is concentrated, may be rapidly dissipated, and problems such as an increase in temperature due to heat generation may be prevented.

The vent structure 50 may include two side notches 52 and 53 and a connection notch 51 that connects the side notches 52 and 53. Each of the connection notch 51 and the side notches 52 and 53 may be formed as an elongated groove, and may be formed as a groove having a trapezoidal longitudinal-sectional shape. However, the present disclosure is not limited thereto, and each of the connection notch 51 and the side notches 52 and 53 may have various longitudinal-sectional shapes such as a triangular shape, or an arc shape.

Furthermore, the connection notch 51 and the side notches 52 and 53 may be fractured at a preset pressure. The connection notch 51 may include a first curved line 51a and a second curved line 51b that are formed of curves. The first curved line 51a and the second curved line 51b may be formed in an arc shape, and may protrude convexly in different directions.

The first curved line 51a may protrude convexly toward one side edge of the vent structure 50 (in a y-axis direction), and the second curved line 51b may protrude convexly toward another side edge of the vent structure 50 (in a -y-axis direction). Accordingly, the first curved line 51a and the second curved line 51b may protrude convexly in opposite directions to form a wave shape or an S-shape.

Here, an inflection point CP1 at which the first curved line 51a and the second curved line 51b meet may be formed at a center in a longitudinal direction (x-axis direction) of the connection notch 51. In addition, the first curved line 51a and the second curved line 51b may have the same curvature radius. For example, the first curved line 51a and the second curved line 51b may be formed to have a first curvature radius R11. Accordingly, the connection notch 51 may be formed in point symmetry with respect to the inflection point CP1.

Here, a length of the connection notch 51 may range from 0.9 times to 1.3 times the length L21 of the major axis X11. In addition, the length of the connection notch 51 may be greater than the length L21 of the major axis X11. For example, the length of the connection notch 51 may range from 1.01 times to 1.3 times the length L21 of the major axis X11.

The two side notches 52 and 53 may be formed to protrude convexly in opposite directions, protruding convexly outward in the longitudinal direction (x-axis direction) of the vent structure 50. The connection notch 51 is connected to the first side notch 52 and the second side notch 53. The first side notch 52 and the second side notch 53 may have the same structure and be arranged in line symmetry.

The first side notch 52 may include a curved portion 52a that is curved in an arc shape, a first linear portion 52b that is connected to one end of the curved portion 52a and extends linearly, and a second linear portion 52c that is connected to a remaining end of the curved portion 52a and extends linearly.

The first linear portion 52b and the second linear portion 52c may extend in the width direction (x-axis direction) of the cap plate 21, and may be arranged parallel to each other. The curved portion 52a is formed in an arc having a second curvature radius R12 and is configured to partially enclose the connection notch 51.

The second side notch 53 may include a curved portion 53a that is curved in an arc shape, a first linear portion 53b that is connected to one end of the curved portion 53a and extends linearly, and a second linear portion 53c that is connected to a remaining end of the curved portion 53a and extends linearly. Furthermore, the connection notch 51 may be connected to longitudinal central portions of the first side notch 52 and the second side notch 53.

The first side notch 52 and the second side notch 53 may be spaced apart from each other by a distance, and may be formed to partially enclose the connection notch 51. Here, the first side notch 52 and the second side notch 53 may enclose 50% to 90% of the connection notch 51.

The first side notch 52 and the second side notch 53 may have the same length. The length of each of the side notches 52 and 53 may be formed longer than a length of the connection notch 51. The length of each of the side notches 52 and 53 may range from 1.02 times to 1.27 times the length of the connection notch 51. For example, the length of the connection notch 51 may range from 18 mm to 55 mm, and the length of each of the side notches 52 and 53 may range from 19 mm to 60 mm.

In the case where the lengths of the side notches 52 and 53 ranges from 1.02 times to 1.27 times the length of the connection notch 51, the connection notch 51 may fracture first, or the side notches 52 and 53 may fracture first. When the side notches 52 and 53 fracture first, two openings may be formed. When the connection notch 51 fractures first, two pieces may be bent upward to form a single opening.

In addition, when the length of the connection notch 51 is defined as L41 and the length of each of the side notches 52 and 53 is defined as L42, the following equation may be satisfied: $L41 + 2 * L42 = DL * L21$, where L21 denotes a maximum width of the vent structure, and DL may be a constant satisfying $2.5 \leq DL \leq 6.5$.

A first distance G11, which is a maximum distance between the major axis X11 and the connection notch 51, may range from 0.05 times to 0.4 times a second distance G12, which is a maximum distance between the major axis X11 and the first side notch 52.

In a secondary battery according to an embodiment of the present disclosure, a connection predetermined breaking line (e.g., a connection notch) may include at least one curved portion extending in a curve (e.g., curved line formed of a curve), thereby efficiently and reliably relieving an increase in internal pressure of a casing.

While the present disclosure has been described with respect to the specific embodiments, it will be apparent to those skilled in the art that various changes or modifications of the present disclosure are possible by adding, changing, or deleting components without departing from the spirit of the present disclosure as defined in the following claims. It should be noted that these changes or modifications also fall within the bounds of the present disclosure.

In view of the above, it will be appreciated that the present invention also provides the following itemized embodiments. Any of these embodiments may additionally comprise any feature or combination of features of the secondary battery, the housing part and/or the vent structure according to any one of the embodiments described herein.

Embodiment 1. A secondary battery, comprising:

a casing including an internal space;
an electrode assembly inserted into the casing and configured to perform charging and discharging;
a cap plate coupled to the casing; and
a vent structure formed in the casing or the cap plate, wherein the vent structure includes a plurality of side notches and a connection notch connecting the side notches, and the connection notch includes at least one curved line formed of a curve.

Embodiment 2. The secondary battery according to embodiment 1, wherein the curved line extends in an arc shape having a first curvature radius, and any one of the side notches includes a curved portion formed in an arc shape and having a second curvature radius.

Embodiment 3. The secondary battery according to embodiment 2, wherein the first curvature radius and the second curvature radius are different from each other.

Embodiment 4. The secondary battery according to embodiment 2, wherein the first curvature radius is greater than the second curvature radius.

Embodiment 5. The secondary battery according to embodiment 2, wherein the first curvature radius is 1.1 times to 5.5 times the second curvature radius.

Embodiment 6. The secondary battery according to embodiment 2, wherein the first curvature radius is 1.8 times to 2.2 times the second curvature radius.

Embodiment 7. The secondary battery according to any one of embodiments 1 to 6, wherein any one of the side notches includes a first linear portion connected to one end of the curved portion and extending in a straight line, and a second linear portion connected to a remaining end of the curved portion and extending in a straight line.

Embodiment 8. The secondary battery according to any one of embodiments 1 to 7, wherein the connection notch includes a first curved line and a second curved line, and the first curved line and the second curved line protrude convexly in opposite directions.

Embodiment 9. The secondary battery according to embodiment 8, wherein the first curved line and the second curved line have a same curvature radius.

Embodiment 10. The secondary battery according to embodiment 8 or 9,

wherein the connection notch is formed with an inflection point at which the first curved line and the second curved line meet, and
wherein an inclination angle of an acute angle formed by a tangent line at the inflection point and a virtual reference line positioned at a central portion in a width direction of the vent structure and extending in a longitudinal direction of the vent structure ranges from 5 degrees to 60 degrees.

Embodiment 11. The secondary battery according to any one of embodiments 8 to 10,

wherein the connection notch is formed with an inflection point at which the first curved line and the second curved line meet, and
wherein an inclination angle of an acute angle formed by a tangent line at the inflection point and a virtual reference line positioned at a central portion in a width direction of the vent structure and extending in a longitudinal direction of the vent structure ranges from 10 degrees to 30 degrees.

Embodiment 12. The secondary battery according to any one of embodiments 1 to 11, wherein a first distance that is a maximum distance between the connection notch and a virtual reference line positioned at a central portion in a width direction of the vent structure and extending in a longitudinal direction of the vent structure is 0.05 times to 0.4 times a second distance that is a maximum distance between the virtual reference line and the side notches.

Embodiment 13. The secondary battery according to any one of embodiments 1 to 12, wherein the vent structure includes two side notches, and the two side notches are formed to enclose 50% to 90% of the connection notch.

Embodiment 14. The secondary battery according to any one of embodiments 1 to 13, wherein the vent structure includes a first linear protrusion extending in a longitudinal direction of the connection notch and protruding convexly, and the connection notch is positioned in the first linear protrusion.

Embodiment 15. The secondary battery according to any one of embodiments 1 to 14, wherein the vent structure includes second linear protrusions extending in longitudinal directions of the respective side notches and protruding convexly, and the side notches are positioned in the respective second linear protrusions.

Embodiment 16. The secondary battery according to any one of embodiments 1 to 15, wherein the vent structure includes a first linear groove extending in a longitudinal direction of the connection notch and recessed in a concave shape, and second linear grooves extending in longitudinal directions of the respective side notches and recessed in a concave shape, the connection notch is positioned in the first linear groove, and the side notches are positioned in the respective second linear grooves.

Embodiment 17. The secondary battery according to any one of embodiments 1 to 16,

wherein the vent structure includes a first recess enclosing the side notches and the connection notch, and a second recess positioned in a bottom of the first recess and extending in a longitudinal direction of the connection notch, and
wherein the side notches are positioned in the first recess, and the connection notch is positioned in the second recess.

Embodiment 18. The secondary battery according to any one of embodiments 1 to 17, wherein the vent structure is located in the cap plate.

Embodiment 19. The secondary battery according to any one of embodiments 1 to 17, wherein the vent structure is located in a bottom or side surface of the casing.

Embodiment 20. The secondary battery according to any one of embodiments 1 to 19, wherein the curved line is formed of a curve including a plurality of curvature radii.

Embodiment 21. The secondary battery according to any one of embodiments 1 to 20, wherein a major axis direction of the vent structure extends parallel to a longitudinal direction of the cap plate.

Embodiment 22. The secondary battery according to any one of embodiments 1 to 20, wherein a major axis direction of the vent structure extends in a direction intersecting a longitudinal direction of the cap plate.

Embodiment 23. The secondary battery according to any one of embodiments 1 to 22,

wherein, when a length of the cap plate is defined as L11, a width of the cap plate is defined as L12, a length of a major axis, which is a longest line segment in a vent structure that passes through a center of the vent structure and connects outer edges of the vent structure, is defined as L21, and a length of a minor axis, which is a longest line segment extending in the vent structure in a longitudinal direction of the cap plate, is defined as L22,
the major axis extends in a direction intersecting the longitudinal direction of the cap plate, and

$$L22 / L11 = AL \times L21 / L12,$$

where $0.08 \leq AL \leq 0.36$.

Embodiment 24. The secondary battery according to any one of embodiments 1 to 23, wherein the length of the minor axis ranges from 0.03 times to 0.08 times the length of the cap plate.

Embodiment 25. The secondary battery according to any one of embodiments 1 to 24, wherein the vent structure includes a connection notch extending in a curved line, and a length of the connection notch ranges from 0.9 times to 1.3 times the length of the major axis.

Embodiment 26. The secondary battery according any one of embodiments 1 to 25, wherein the length of the connection notch is greater than the length of the major axis.

Embodiment 27. The secondary battery according to any one of embodiments 1 to 26,

wherein the vent structure comprises a first convex portion and a second convex portion that are disposed adjacent to each other and protrude, and the connection notch is located between the first convex portion and the second convex portion.

Embodiment 28. The secondary battery according to embodiment 27, wherein an inclination angle formed between a tangent line of the first convex portion or the second convex portion at a portion of the corresponding convex portion connected to the connection notch and a plane parallel to the cap plate ranges from 1 degree to 20 degrees.

Embodiment 29. The secondary battery according to embodiment 27 or 28, wherein a first tangential angle formed between a tangent line at an edge of the first convex portion adjacent to the connection notch and a virtual reference plane parallel to the cap plate is smaller than a second tangential angle formed between a tangent line at an edge of the first convex portion adjacent to any one of the side notches and the reference plane.

Embodiment 30. The secondary battery according to embodiment 29, wherein the second tangential angle ranges from 1.1 times to 3.5 times the first tangential angle.

Embodiment 31. The secondary battery according to any one of embodiments 27 to 30,

wherein the connection notch includes an inflection point at which the first curved line and the second curved line meet, a first reference point at which the first curved line forms a maximum distance from a reference line extending in a longitudinal direction of the vent structure at a center in a width direction of the vent structure, and a second reference point at which the second curved line forms a maximum distance from the reference line, and
wherein a first inclination angle formed between a tangent line at an outer edge of the first convex portion in the width direction at the first reference point and a virtual reference plane parallel to the cap plate, and a second inclination angle formed between a tangent line at an outer edge of the first convex portion in the width direction at the second reference point and the reference plane, are each greater than a third inclination angle formed between a tangent line at an outer edge of the first convex portion in the width direction at the inflection point and the reference plane.

Embodiment 32. The secondary battery according to embodiment 31, wherein each of the first inclination angle and the second inclination angle ranges from 1.2 times to 2.5 times the third inclination angle.

Embodiment 33. The secondary battery according to any one of embodiments 1 to 32, wherein, when the first curvature radius is defined as R11, the second curvature radius is defined as R12, and a first distance that is a maximum distance between a virtual reference line extending in a longitudinal direction of the vent structure and the connection notch is defined as G11,

$$R11 = A * R12 + G11,$$

where $1.3 \leq A \leq 4.5$.

Embodiment 34. The secondary battery according to any one of embodiments 27 to 33, wherein the connection notch, the side notches, the first convex portion, and the second convex portion are formed on a surface of the vent structure that faces an outer side of the casing.

Embodiment 35. The secondary battery according to any one of embodiments 27 to 33, wherein the connection notch, the side notches, the first convex portion, and the second convex portion are formed on a surface of the vent structure that faces an inner side of the casing.

Embodiment 36. The secondary battery according to any one of embodiments 27 to 33, wherein the first convex portion and the second convex portion are formed on a surface of the vent structure that faces an outer side of the casing, and the connection notch and the side notches are formed on a surface of the vent structure that faces an inner side of the casing.

Embodiment 37. The secondary battery according to any one of embodiments 27 to 33, wherein the first convex portion and the second convex portion are formed on a surface of the vent structure that faces an inner side of the casing, and the connection notch and the side notches are formed on a surface of the vent structure that faces an outer side of the casing.

Embodiment 38. The secondary battery according to any one of embodiments 1 to 37, wherein the vent structure further comprises a support rib protruding from a position outside each of the side notches and enclosing the corresponding side notch.

In view of the above, it will further be appreciated that the present invention also provides the following itemized embodiments (which are referred to and numbered as "examples" below). Any of these embodiments may additionally comprise any feature or combination of features of the secondary battery, the housing part and/or the vent structure according to any one of the embodiments described herein.

Example 1. A secondary battery, comprising:

> a casing including;
> an electrode assembly accommodated in the casing and configured to be charged and discharged;
> a cap plate coupled to the casing; and
> a vent structure located along the casing or the cap plate,
> wherein the vent structure includes a plurality of lateral scores and a connection score connecting the lateral scores, and wherein the connection score includes at least one curved line following a curved path along a length direction of the connection score, and
wherein at least one lateral score of the plurality of lateral scores includes a curved portion along a length direction of the at least one lateral score.

Example 2. The secondary battery according to example 1, wherein the curved line extends in an arc shape having a first curvature radius, and the curved portion of the at least one lateral score defines an arc shape having a second curvature radius.

Example 3. The secondary battery according to example 2, wherein the first curvature radius is different from the second curvature radius.

Example 4. The secondary battery according to example 2, wherein the first curvature radius is greater than the second curvature radius.

Example 5. The secondary battery according to example 2, wherein the first curvature radius is 1.1 times to 5.5 times the second curvature radius.

Example 6. The secondary battery according to any one of examples 1 to 5, wherein the at least one lateral score includes a first linear portion connected to a first end of the curved portion and extending in a straight line, and a second linear portion connected to a second end of the curved portion and extending in a straight line.

Example 7. The secondary battery according to any one of examples 1 to 6, wherein the at least one curved line includes a first curved line and a second curved line, and the first curved line and the second curved line are bowed out in opposing directions.

Example 8. The secondary battery according to any one of examples 1 to 7, wherein a curvature radius of the first curved line equals a curvature radius of the second curved line.

Example 9. The secondary battery according to any one of examples 1 to 8,

> wherein the connection score has an inflection point at which the first curved line and the second curved line meet, and
> wherein an inclination angle of an acute angle defined between a tangent line at the inflection point and a longitudinal axis the vent structure ranges from 5 degrees to 60 degrees.

Example 10. The secondary battery according to any one of examples 1 to 9, wherein a first distance that is a maximum distance between the connection score and a longitudinal axis of the vent structure is 0.05 times to 0.4 times a second distance that is a maximum distance between the longitudinal axis and the lateral scores.

Example 11. The secondary battery according to any one of examples 1 to 10, wherein the plurality of lateral scores includes a pair of lateral scores, and the pair of lateral scores surround from 50% to 90% of the connection score.

Example 12. The secondary battery according to any one of examples 1 to 11, wherein the vent structure includes a first elongated protrusion extending longitudinally along the connection score and protruding convexly from the vent structure, and the connection score is positioned on the first elongated protrusion.

Example 13. The secondary battery according to any one of examples 1 to 12, wherein the vent structure includes second elongated protrusions extending longitudinally along the respective lateral scores and protruding convexly from the vent structure, and the lateral scores are positioned on the respective second elongated protrusions.

Example 14. The secondary battery according to any one of examples 1 to 13, wherein the vent structure includes a first elongated groove extending longitudinally along the connection score and recessed in a concave shape within the vent structure, and second elongated grooves extending longitudinally along the respective lateral scores and recessed in a concave shape within the vent structure, the connection score is positioned in the first elongated groove, and the lateral scores are positioned in the respective second elongated grooves.

Example 15. The secondary battery according to any one of examples 1 to 14,

wherein the vent structure includes a first recess encompassing the lateral scores and the connection score, and a second recess positioned in a bottom of the first recess and extending longitudinally along the connection score, and
wherein the lateral scores are positioned in the first recess, and the connection score is positioned in the second recess.

Example 16. The secondary battery according to any one of examples 1 to 15, wherein the vent structure is located in the cap plate, a bottom surface of the casing, or a side surface of the casing.

Example 17. The secondary battery according to any one of examples 1 to 16, wherein the curved line includes a plurality of curvature radii.

Example 18. The secondary battery according to any one of examples 1 to 17, wherein a longitudinal axis of the vent structure extends parallel to a longitudinal direction of the cap plate.

Example 19. The secondary battery according to any one of examples 1 to 18, wherein a longitudinal axis of the vent structure extends in a direction intersecting a longitudinal direction of the cap plate.

Example 20. The secondary battery according to any one of examples 1 to 19,

wherein, when a length of the cap plate is defined as L11, a width of the cap plate is defined as L12, a length of a major axis, which is a longest line segment in a vent structure that passes through a center of the vent structure and connects outer edges of the vent structure, is defined as L21, and a length of a minor axis, which is a longest line segment extending in the vent structure in a longitudinal direction of the cap plate, is defined as L22,
the major axis extends in a direction intersecting the longitudinal direction of the cap plate, and

$$L22 / L11 = AL \times L21 / L12,$$

where $0.08 \leq AL \leq 0.36$.

Example 21. The secondary battery according to any one of examples 1 to 20,
wherein the length of the minor axis ranges from 0.03 times to 0.08 times the length of the cap plate.

Example 22. The secondary battery according to any one of examples 1 to 21,
wherein the vent structure includes a connection notch extending in a curved line, and a length of the connection notch ranges from 0.9 times to 1.3 times the length of the major axis.

Example 23. The secondary battery according to example 22,
wherein the length of the connection notch is greater than the length of the major axis.

Example 24. The secondary battery according to any one of examples 1 to 23,

wherein the vent structure comprises a first convex portion and a second convex portion that are disposed adjacent to each other and protrude, and
the connection notch is located between the first convex portion and the second convex portion.

Example 25. The secondary battery according to example 24, wherein an inclination angle formed between a tangent line of the first convex portion or the second convex portion at a portion of the corresponding convex portion connected to the connection notch and a plane parallel to the cap plate ranges from 1 degree to 20 degrees.

Example 26. The secondary battery according to example 24 or 25, wherein a first tangential angle formed between a tangent line at an edge of the first convex portion adjacent to the connection notch and a virtual reference plane parallel to the cap plate is smaller than a second tangential angle formed between a tangent line at an edge of the first convex portion adjacent to any one of the side notches and the reference plane.

Example 27. The secondary battery according to example 26, wherein the second tangential angle ranges from 1.1 times to 3.5 times the first tangential angle.

Example 28. The secondary battery according to any one of examples 24 to 27,

wherein the connection notch includes an inflection point at which the first curved line and the second curved line meet, a first reference point at which the first curved line forms a maximum distance from a reference line extending in a longitudinal direction of the vent structure at a center in a width direction of the vent structure, and a second reference point at which the second curved line forms a maximum distance from the reference line, and

wherein a first inclination angle formed between a tangent line at an outer edge of the first convex portion in the width direction at the first reference point and a virtual reference plane parallel to the cap plate, and a second inclination angle formed between a tangent line at an outer edge of the first convex portion in the width direction at the second reference point and the reference plane, are each greater than a third inclination angle formed between a tangent line at an outer edge of the first convex portion in the width direction at the inflection point and the reference plane.

Example 29. The secondary battery according to example 28, wherein each of the first inclination angle and the second inclination angle ranges from 1.2 times to 2.5 times the third inclination angle.

Example 30. The secondary battery according to any one of examples 1 to 29, wherein, when the first curvature radius is defined as R11, the second curvature radius is defined as R12, and a first distance that is a maximum distance between a virtual reference line extending in a longitudinal direction of the vent structure and the connection notch is defined as G11,

$$R11 = A * R12 + G11,$$

where $1.3 \leq A \leq 4.5$.

Example 31. The secondary battery according to any one of examples 24 to 30, wherein the connection notch, the side notches, the first convex portion, and the second convex portion are formed on a surface of the vent structure that faces an outer side of the casing.

Example 32. The secondary battery according to any one of examples 24 to 30, wherein the connection notch, the side notches, the first convex portion, and the second convex portion are formed on a surface of the vent structure that faces an inner side of the casing.

Example 33. The secondary battery according to any one of examples 24 to 30, wherein the first convex portion and the second convex portion are formed on a surface of the vent structure that faces an outer side of the casing, and the connection notch and the side notches are formed on a surface of the vent structure that faces an inner side of the casing.

Example 34. The secondary battery according to any one of examples 24 to 30, wherein the first convex portion and the second convex portion are formed on a surface of the vent structure that faces an inner side of the casing, and the connection notch and the side notches are formed on a surface of the vent structure that faces an outer side of the casing.

Example 35. The secondary battery according to any one of example 1 to 34, wherein the vent structure further comprises a support rib protruding from a position outside each of the side notches and enclosing the corresponding side notch.

Example 36. A secondary battery, comprising:

a casing including an internal space;
an electrode assembly accommodated in the casing and configured to be charged and discharged;
a cap plate coupled to the casing; and
a vent structure located along the casing or the cap plate,
wherein the vent structure includes a plurality of lateral scores and a connection score connecting the lateral scores, and wherein the connection score includes at least one curved line following a curved path along a length direction of the connection score.

Example 37. A secondary battery, comprising:

a casing including an internal space;
an electrode assembly accommodated in the casing and configured to be charged and discharged;
a cap plate coupled to the casing; and
a vent structure located along the casing or the cap plate,
wherein the vent structure includes a plurality of lateral scores and a connection score connecting the lateral scores, and
wherein at least one lateral score of the plurality of lateral scores includes a curved portion along a length direction of the at least one lateral score.

Example 38. The secondary battery of example 36 or 37, wherein the connection score includes at least one bend along a length direction of the connection score.

Example 39. The secondary battery of any one of examples 36 to 38 wherein the connection score includes two bends along the length direction of the connection score and the bends bend out in opposing directions.

Example 40. The secondary battery of example 36 or 37, wherein the connection score is straight along a length between the lateral scores.

**Claims**

1. A secondary battery (100), comprising:

a casing (30, 80);
an electrode assembly (10) arranged in the casing (30, 80);

a cap (21) coupled to the casing (30, 80); and

a vent structure (50) formed in the casing (30, 80) or the cap (21),

wherein the vent structure (50) includes a plurality of outer predetermined breaking lines (52, 53) and a connection predetermined breaking line (51) connecting the outer predetermined breaking lines (52, 53), and the connection predetermined breaking line (51) includes at least one curved portion (51a, 51b) extending in a curve.

2. The secondary battery (100) according to claim 1, wherein the curved portion (51a, 51b) extends in an arc shape having a first curvature radius (R11).

3. The secondary battery (100) of claim 1 or 2, wherein one or more of the outer predetermined breaking lines (52, 53) include a curved portion (52a, 53a) extending in a curve, in particular an arc shape having a second curvature radius (R12), wherein optionally the connection predetermined breaking line (51) is arranged on a concave side of the curved portion (52a, 53a) of the respective outer predetermined breaking line (52, 53).

4. The secondary battery (100) according to claim 2 and 3, wherein the first curvature radius (R11) and the second curvature radius (R12) are different from each other, wherein optionally the first curvature radius (R11) is greater than the second curvature radius (R12), in particular wherein the first curvature radius (R11) is 1.1 times to 5.5 times the second curvature radius (R12), preferably 1.8 times to 2.2 times the second curvature radius (R12).

5. The secondary battery (100) according to claim 3 or 4, wherein one or more of the one or more outer predetermined breaking lines (52, 53) that include a curved portion (52a, 53a) further include a first linear portion (52b, 53b) connected to a first end of the curved portion (52a, 53a) and extending in a straight line and, optionally, a second linear portion (52c, 53c) connected to a second end of the curved portion (52a, 53a) opposite to the first end and extending in a straight line.

6. The secondary battery (100) according to any one of the preceding claims, wherein said at least one curved portion (51a, 51b) of the connection predetermined breaking line (51) includes a first curved portion (51a) and a second curved portion (51b), in particular wherein the first curved portion (51a) and the second curved portion (51b) protrude convexly in opposite directions and/or wherein the first curved portion (51a) and the second curved portion (51b) have a same curvature radius, wherein optionally the connection predetermined breaking line (51) is formed with an inflection portion connecting the first curved portion (51a) and the second curved portion (51b) and an acute angle (A11) formed by a tangent line to the inflection portion and a reference line (SL1) extending through a center of the vent structure (50) and parallel to a longitudinal direction of the vent structure (50) ranges from 5 degrees to 60 degrees, preferably from 10 degrees to 30 degrees.

7. The secondary battery (100) according to any one of the preceding claims, wherein:

a first distance (G11) that is a maximum distance between the connection predetermined breaking line (51) and the reference line (SL1) extending through the center of the vent structure (50) and parallel to the longitudinal direction of the vent structure (50) is 0.05 times to 0.4 times a second distance (G12) that is a maximum distance between the reference line (SL1) and the outer predetermined breaking lines (51, 52); and/or

the vent structure (50) includes two outer predetermined breaking lines (52, 53) connected by the connection predetermined breaking line (51), and the two outer predetermined breaking lines (52, 53) enclose 50% to 90% of a length of the connection predetermined breaking line (51).

8. The secondary battery (100) according to any one of the preceding claims, wherein the vent structure (50) includes a base having a first side and a second side opposite to the first side, wherein the connection predetermined breaking line (51) and the outer predetermined breaking lines (52, 53) are formed in and/or on the base,

in particular wherein the vent structure (50) includes one or both of a first elongate protrusion (215, 225, 236) protruding from the first side of the base and a first groove (214, 224, 237) in the second side of the base, the first elongate protrusion (215, 225, 236) and the first groove (214, 224, 237) each extending along the connection predetermined breaking line (51), wherein the connection predetermined breaking line (51) or a part thereof is formed in and/or on one or both of the first elongate protrusion (215, 225, 236) and the first groove (214, 224, 237).

9. The secondary battery (100) according to claim 8, wherein:

the vent structure (50) includes, for some or all of the outer predetermined breaking lines (52, 53), one or both of a respective second elongate protrusion (216, 226) protruding from the first or second side of the base and a respective second groove (217, 227) in the second and first side, respectively, of the base, the second elongate protrusion (216, 226) and the second groove (217, 227) extending along the respective outer predetermined breaking line (52, 53), wherein the respective outer predetermined breaking line (52, 53) is formed in and/or on one or both of the second elongate protrusion (216, 226) and the second groove (217, 227); and/or

the vent structure (50) includes a recess (55, 234) in the first or second side of the base and wherein the connection predetermined breaking line (51) and the outer predetermined breaking lines (52, 53) are formed in and/or on a bottom of the recess (55, 234), in particular wherein the vent structure (50) further comprises said first groove (214, 224, 237), the first groove (214, 224, 237) is formed in the bottom of the recess (55, 234) and the connection predetermined breaking line (51) is formed in and/or on the first groove (214, 224, 237).

10. The secondary battery (100) according to claim 8 or 9, wherein the base of the vent structure (50) comprises a bent portion (56, 57) arranged between the connection predetermined breaking line (51) and one or more of the outer predetermined breaking lines (52, 53), the bent portion (56, 57) protruding from a plane extending between the connection predetermined breaking line (51) and said one or more of the outer predetermined breaking lines (52, 53), wherein optionally the bent portion (56, 57) is arranged between the connection predetermined breaking line (51) and a first one of the outer predetermined breaking lines (52, 53) and between the connection predetermined breaking line (51) and a second one of the outer predetermined breaking lines (52, 53).

11. The secondary battery (100) according to claim 10, wherein the bent portion (56, 57) is a first bent portion (56) arranged on a first side of the connection predetermined breaking line (51) and the base of the vent structure (50) further comprises a second bent portion (57) arranged on a second side of the connection predetermined breaking line (51) opposite to the first side, in particular wherein:

the first bent portion (56) is arranged between the connection predetermined breaking line (51) and a first portion of the first one of the outer predetermined breaking lines (52, 53) and, optionally, between the connection predetermined breaking line (51) and a first portion of the second one of the outer predetermined breaking lines (52, 53); and

the second bent portion (57) is arranged between the connection predetermined breaking line (51) and a second portion of the first one of the outer predetermined breaking lines (52, 53) and, optionally, between the connection predetermined breaking line (51) and a second portion of the second one of the outer predetermined breaking lines (52, 53).

12. The second battery (100) according to any one of the preceding claims, wherein the vent structure (50) is located in the cap (21) or in a bottom or side surface of the casing (30, 80).

13. The secondary battery (100) according to any one of the preceding claims, wherein one or more of the at least one curved portion (51a, 51b) of the connection predetermined breaking line (51) extends in a curve including segments (241aa-ac, 241ba-bc) having different curvatures.

14. The secondary battery (100) according to claim 13, wherein the curve includes a first segment (241aa, 241ba) having a first curvature radius (R21), a second segment (214ab, 241bc) connected to a first end of the first segment (241aa, 241ba) and having a second curvature radius (R22) and, optionally, a third segment (241ac, 241bb) connected to a second end of the first segment (241aa, 241ba) opposite to the first end and having a third curvature radius (R23), in particular wherein the first curvature radius (R21) is greater than one or both of the second curvature radius (R22) and the third curvature radius (R23).

15. The secondary battery (100) according to any one of the preceding claims, wherein:

a longitudinal direction of the vent structure (50) extends parallel to a longitudinal direction of the cap (21) or in a direction at an angle to the longitudinal direction of the cap (21), and/or
the longitudinal direction of the vent structure (50) extends parallel to or in a direction at an angle to a longitudinal direction of a side of the casing that the vent structure (50) is formed in, and/or
the connection predetermined breaking line (51) and/or some or all of the outer predetermined breaking lines (52, 53) is/are formed as a respective notch.

# FIG. 1

## FIG. 2

## FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

## FIG. 21

## FIG. 22

## FIG. 23

## FIG. 24

## FIG. 25

## FIG. 26

## FIG. 27

# FIG. 28

# FIG. 29

# FIG. 30

# FIG. 31

# FIG. 32

# FIG. 33

**EP 4 697 477 A1**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/040532 A1 (CONTEMPORARY AMPEREX TECHNOLOGY CO LTD [CN]) 29 February 2024 (2024-02-29) | 1-9, 12-15 | INV. H01M50/342 H01M50/15 |
| A | * figures * * claims * * paragraph [0083] - paragraph [0179] * | 10,11 | |
| X | EP 3 509 133 A1 (CONTEMPORARY AMPEREX TECHNOLOGY CO LTD [CN]) 10 July 2019 (2019-07-10) * figures * * claims * * paragraph [0021] - paragraph [0058] * | 1,8-12, 15 | |
| X | US 2021/359373 A1 (KADOTA KOHEI [JP] ET AL) 18 November 2021 (2021-11-18) * figures * * claims * * paragraph [0029] - paragraph [0069] * | 1,8,9, 12,15 | |
| X | WO 2014/073518 A1 (TOYOTA JIDOSHOKKI KK [JP]) 15 May 2014 (2014-05-15) * figures 1,3,5,11,14 * | 1,8,12, 15 | TECHNICAL FIELDS SEARCHED (IPC) H01M |

The present search report has been drawn up for all claims

| Place of search | Date of completion of the search | Examiner |
|---|---|---|
| The Hague | 17 December 2025 | Whelan, Natalie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 5434

17-12-2025

| Patent document cited in search report | | Publication date | Patent family member(s) | | Publication date |
|---|---|---|---|---|---|
| WO 2024040532 | A1 | 29-02-2024 | CN | 117638389 A | 01-03-2024 |
| | | | CN | 118402127 A | 26-07-2024 |
| | | | EP | 4451448 A1 | 23-10-2024 |
| | | | US | 2024429547 A1 | 26-12-2024 |
| | | | WO | 2024040532 A1 | 29-02-2024 |
| | | | WO | 2024221825 A1 | 31-10-2024 |
| EP 3509133 | A1 | 10-07-2019 | CN | 108428836 A | 21-08-2018 |
| | | | CN | 120184500 A | 20-06-2025 |
| | | | EP | 3509133 A1 | 10-07-2019 |
| | | | US | 2019214619 A1 | 11-07-2019 |
| US 2021359373 | A1 | 18-11-2021 | CN | 110291659 A | 27-09-2019 |
| | | | DE | 112018000555 T5 | 10-10-2019 |
| | | | JP | 6963964 B2 | 10-11-2021 |
| | | | JP | 2018125278 A | 09-08-2018 |
| | | | US | 2021359373 A1 | 18-11-2021 |
| WO 2014073518 | A1 | 15-05-2014 | CN | 104756283 A | 01-07-2015 |
| | | | DE | 112013005296 T5 | 16-07-2015 |
| | | | JP | 6011635 B2 | 19-10-2016 |
| | | | JP | WO2014073518 A1 | 08-09-2016 |
| | | | US | 2015280191 A1 | 01-10-2015 |
| | | | WO | 2014073518 A1 | 15-05-2014 |

**REFERENCES CITED IN THE DESCRIPTION**

**Patent documents cited in the description**

- KR 1020240108804
- KR 1020240123535

- KR 1020250039745